(19) **Europäisches Patentamt / European Patent Office / Office européen des brevets**

(11) **EP 4 510 685 A1**

(12) **EUROPEAN PATENT APPLICATION**
published in accordance with Art. 153(4) EPC

(43) Date of publication:
**19.02.2025 Bulletin 2025/08**

(21) Application number: **22936870.9**

(22) Date of filing: **13.04.2022**

(51) International Patent Classification (IPC):
***H04W 24/10*** (2009.01)

(52) Cooperative Patent Classification (CPC):
**H04W 24/10**

(86) International application number:
**PCT/CN2022/086688**

(87) International publication number:
**WO 2023/197220 (19.10.2023 Gazette 2023/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventor: **LI, Xiaolong
Beijing 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **NEIGHBORING CELL MEASUREMENT METHOD AND APPARATUS, AND DEVICE AND STORAGE MEDIUM**

(57) The present application belongs to the field of mobile communications. Disclosed are a neighboring cell measurement method and apparatus, and a device and a storage medium. The method comprises: a terminal receives configuration information, which is sent by a network device, wherein the configuration information comprises at least one piece of reference point information and a distance threshold corresponding to each piece of reference point information, and each piece of reference point information and/or the distance threshold corresponding to each piece of reference point information are/is associated with at least one frequency (step 202); and performing neighboring cell measurement on the basis of the at least one piece of reference point information and the distance threshold corresponding to each piece of reference point information (step 203). By means of the neighboring cell measurement method provided in the present application, neighboring cell measurement is guaranteed, and cell measurement is performed on the basis of reference point information and a distance threshold corresponding to the reference point information, such that the accuracy of cell measurement is improved.

FIG. 2

**Description**

<u>**TECHNICAL FIELD**</u>

The present application relates to the field of mobile communications, and in particular to a neighboring cell measurement method and apparatus, a device and a storage medium.

<u>**BACKGROUND**</u>

In a mobile communication system, a network device can communicate with a terminal via a Non-Terrestrial Network (NTN) or a Terrestrial Network (TN). For the terminal, how to perform cell measurement on cells belonging to different networks has become an urgent problem to be solved.

<u>**SUMMARY**</u>

The embodiments of the present application provide a neighboring cell measurement method and apparatus, device and storage medium, so as to provide a manner for neighboring cell measurement to ensure the measurement of neighboring cells, and perform cell measurement based on reference point information and a distance threshold corresponding to the reference point information, thereby improving the accuracy of cell measurement. The technical solution is as follows.

According to one aspect of the present application, a neighboring cell measurement method is provided. The method is performed by a terminal, and includes:

receiving configuration information sent by a network device, the configuration information including at least one piece of reference point information and a distance threshold corresponding to every one of the at least one piece of reference point information, in which the at least one piece of reference point information and/or the distance threshold corresponding to the every piece of reference point information is associated with at least one frequency; and
performing a neighboring cell measurement based on the at least one piece of reference point information and the distance threshold corresponding to the every piece of reference point information.

According to one aspect of the present application, a neighboring cell measurement method is provided. The method is performed by a network device, and includes:

sending configuration information to a terminal, where the configuration information includes at least one piece of reference point information and a distance threshold corresponding to every one of the at least one piece of reference point information, in which the at least one piece of reference point information and/or the distance threshold corresponding to the every piece of reference point information is associated with at least one frequency;
the at least one piece of reference point information and the distance threshold corresponding to the every piece of reference point information are used by the terminal to perform a neighboring cell measurement.

According to one aspect of the present application, a neighboring cell measurement apparatus is provided. The apparatus includes:

a receiving module, configured to receive configuration information sent by a network device, in which the configuration information includes at least one piece of reference point information and a distance threshold corresponding to every one of the at least one piece of reference point information, in which the at least one piece of reference point information and/or the distance threshold corresponding to the every piece of reference point information is associated with at least one frequency; and
a measurement module, configured to perform a neighboring cell measurement based on the at least one piece of reference point information and the distance threshold corresponding to the every piece of reference point information.

According to one aspect of the present application, a neighboring cell measurement apparatus is provided. The apparatus includes:

a sending module, configured to send configuration information to a terminal, in which the configuration information includes at least one piece of reference point information and a distance threshold corresponding to every one of the at least one piece of reference point information, in which the at least one piece of reference point information and/or the

**EP 4 510 685 A1**

distance threshold corresponding to the every piece of reference point information is associated with at least one frequency;

the at least one piece of reference point information and the distance threshold corresponding to the every piece of reference point information are used by the terminal to perform a neighboring cell measurement.

According to one aspect of the present application, a terminal is provided. The terminal includes: a processor; a transceiver connected to the processor; and a memory for storing instructions executable by the processor; in which the processor is configured to load and execute the executable instructions to implement the neighbor cell measurement method as described above.

According to one aspect of the present application, a network device is provided. The network device includes: a processor; a transceiver connected to the processor; and a memory for storing instructions executable by the processor; in which the processor is configured to load and execute the executable instructions to implement the neighbor cell measurement method as described above.

According to one aspect of the present application, a computer-readable storage medium is provided, in which an executable program code is stored. The executable program code, when being loaded and executed by a processor, implements the neighbor cell measurement methods as described above.

According to one aspect of the present application, a chip is provided. The chip includes a programmable logic circuit and/or program instructions. The chip, when running in a terminal or a network device, implements the neighbor cell measurement method as described above.

According to one aspect of the present application, a computer program product is provided. When the computer program product is executed by a processor of a terminal or a network device, the neighbor cell measurement method as described above is implemented.

In the neighboring cell measurement scheme provided in the embodiments of the present application, the network device configures reference point information and a distance threshold corresponding to each piece of reference point information for the terminal, so that the terminal performs a neighboring cell measurement based on the reference point information and the distance threshold corresponding to the reference point information. Therefore, a neighboring cell measurement method is provided, which ensures the measurement of neighboring cells, and the cell measurement is performed based on the reference point information and the distance threshold corresponding to the reference point information, thereby improving the accuracy of cell measurement.

## BRIEF DESCRIPTION OF THE DRAWINGS

In order to more clearly illustrate the technical solutions in the embodiments of the present application, the drawings required for use in the description of the embodiments will be briefly introduced below. Obviously, the drawings described below are only some embodiments of the present application. For those of ordinary skill in the art, other drawings can be obtained based on these drawings without creative work.

FIG. 1 shows a block diagram of a communication system according to an exemplary embodiment of the present application.

FIG. 2 shows a flow chart of a neighboring cell measurement method according to an exemplary embodiment of the present application.

FIG. 3 shows a block diagram of a neighboring cell measurement apparatus according to an exemplary embodiment of the present application.

FIG. 4 shows a block diagram of a neighboring cell measurement apparatus according to an exemplary embodiment of the present application.

FIG. 5 shows a schematic structural diagram of a communication device according to an exemplary embodiment of the present application.

## DETAILED DESCRIPTION

In order to make the objectives, technical solutions and advantages of the present application more clear, embodiments of the present application will be further described in detail below with reference to the accompanying drawings.

Exemplary embodiments will be described in detail herein, examples of which are shown in the accompanying drawings. Unless otherwise indicated in the description related to drawings, the same numbers in different drawings represent the same or similar elements. Implementations described in the following exemplary embodiments do not represent all implementations consistent with the present application. Instead, they are merely examples of apparatuses and methods consistent with some aspects of the present application as detailed in the appended claims.

3

The terms used in this application are only for the purpose of describing specific embodiments and are not intended to limit this application. The singular forms of "a", "said" and "the" used in this application and the appended claims are also intended to include plural forms, unless the context clearly indicates other meanings. It should also be understood that the term "and/or" used herein refers to and includes any or all possible combinations of one or more items connected by the term.

It should be understood that, although the terms "first", "second", "third", etc. may be used in the present application to describe various information, these pieces of information should not be limited by these terms. These terms are only used to distinguish the same type of information from each other. For example, without departing from the scope of the present application, the first information may also be referred to as the second information, and similarly, the second information may also be referred to as the first information. Depending on the context, for example, the word "if" used herein may be interpreted as "in a case that" or "when" or "in response to determining".

It should be noted that the information (including, but not limited to, user equipment information, user personal information, etc.), data (including, but not limited to, data used for analysis, stored data, displayed data, etc.) and signals involved in this application are all authorized by the user or fully authorized by all parties, and the collection, usage and processing of relevant data must comply with relevant laws, regulations and standards of relevant countries and regions.

The following is an explanation of the application scenarios of this application.

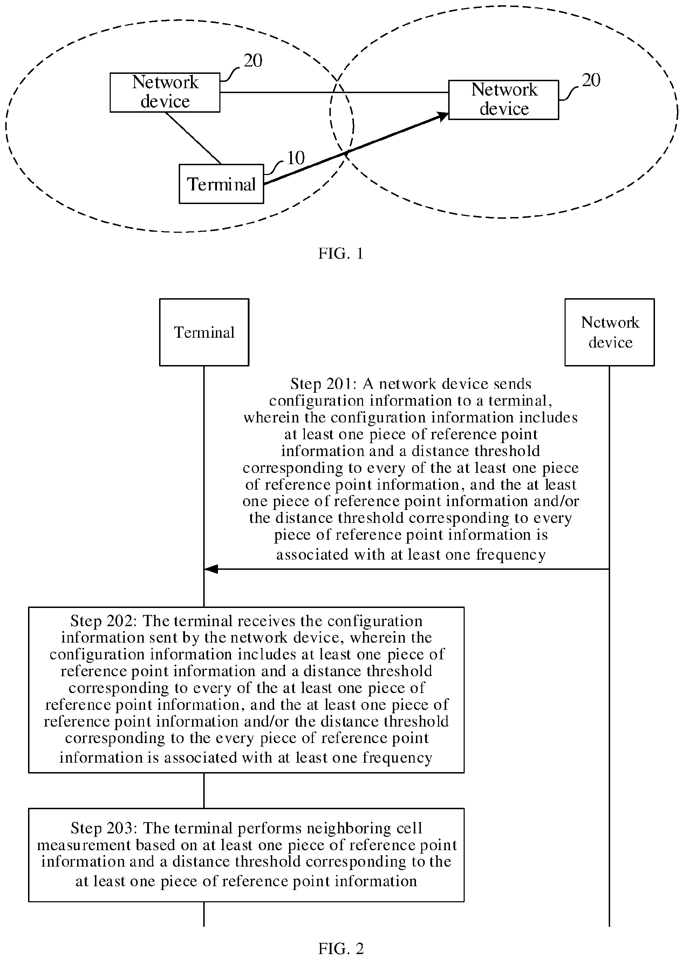

FIG. 1 shows a block diagram of a communication system according to an exemplary embodiment of the present application. The communication system may include: a terminal 10 and network devices 20.

There are usually a plurality of terminals 10, and one or more terminals 10 may be distributed in a cell managed by each network device 20. The terminal 10 may include various handheld devices, vehicle-mounted devices, wearable devices, computing devices that have wireless communication functions, or other processing devices connected to a wireless modem, as well as various forms of user equipment (UE), mobile stations (MS), etc. For the convenience of description, in the embodiments of the present application, the above-mentioned devices are generally referred to as terminals.

The network device 20 is an apparatus deployed in the access network to provide a wireless communication function for the terminal 10. For the convenience of description, in the embodiments of the present application, the above-mentioned apparatus that provides wireless communication functions for the terminal 10 is generally referred to as a network device. A connection can be established between the network device 20 and the terminal 10 via an air interface, so that communication, including the exchange of signaling and data, is performed via the connection. There can be multiple network devices 20, and two adjacent network devices 20 can also communicate with each other in a wired or wireless manner. The terminal 10 can be handed over between different network devices 20, that is, establish connections with different network devices 20.

The network device 20 may include various forms of macro base stations, micro base stations, relay stations, access points, etc. In systems using different radio access technologies, the name of a device with the network device function may vary, for example, in a 5G New Radio (NR) system, it is called gNodeB or gNB. With the evolution of communication technology, the name of "network device" may change.

FIG. 2 shows a flowchart of a neighbor cell measurement method according to an exemplary embodiment of the present application, which can be exemplarily applied to the terminal and the network device shown in FIG. 1, and the method includes at least part of the following contents.

Step 201: A network device sends configuration information to a terminal, in which the configuration information includes at least one piece of reference point information and a distance threshold corresponding to every one of the at least one piece of reference point information, and the at least one piece of reference point information and/or the distance threshold corresponding to the every piece of reference point information is associated with at least one frequency.

In an embodiment of the present application, the network device configures at least one piece of reference point information and a distance threshold corresponding to the every piece of reference point information for the terminal via the configuration information, and the at least one piece of reference point information and/or the distance threshold corresponding to the every piece of reference point information is associated with at least one frequency. Each piece of reference point information corresponds to a distance threshold, and is also associated with a frequency, that is, for different pieces of reference point information and/or distance thresholds corresponding to different pieces of reference point information, a piece of reference point information and/or a distance threshold corresponding to the reference point information is associated with at least one frequency.

The association relationship between each piece of reference point information and/or the distance threshold corresponding to the each piece of reference point information and the frequency includes any one of the following:

(1) Each piece of reference point information is associated with at least one frequency;
(2) The distance threshold corresponding to each piece of reference point information is associated with at least one frequency;
(3) Each piece of reference point information and the distance threshold corresponding to each piece of reference point information is associated with at least one frequency.

In other words, in embodiments of the present application, a frequency may be associated with each piece of reference point information and/or the distance threshold corresponding to each piece of reference point information, and the specific association relationship includes any one of the following:

(1) One frequency is associated with at least one piece of reference point information;
(2) One frequency is associated with a distance threshold corresponding to at least one piece of reference point information;
(3) One frequency domain is associated with at least one piece of reference point information and the distance threshold corresponding to at least one piece of reference point information.

In some embodiments, the distance threshold is expressed in length, for example, the distance threshold is measured in meters, kilometers, or other length units, which are not limited in the embodiments of the present application.
In some embodiments, different pieces of reference point information are associated with the same frequency, or different pieces of reference point information are associated with different respective frequencies.
Optionally, the reference point information is position information, that is, at least one piece of reference point information indicates a neighboring cell position.
In the embodiment of the present application, the reference point information may indicate the position of a neighboring cell. If different pieces of reference point information are associated with the same frequency, it means that the frequencies of different neighboring cells are the same. If different pieces of reference point information are associated with different respective frequencies, it means that the frequencies of different neighboring cells are different from each other.
It should be noted that, among the multiple pieces of reference point information, there are pieces of reference point information associated with the same frequency, and there are pieces of reference point information associated with different respective frequencies.
For example, the network device configures four pieces of reference point information for the terminal, namely, reference point information 1, reference point information 2, reference point information 3 and reference point information 4. The Reference point information 1 is associated with a frequency 1, the reference point information 2 is associated with a frequency 2, the reference point information 3 is associated with the frequency 1, and the reference point information 4 is associated with a frequency 3.
In addition, the embodiments of the present application are described by taking the example of whether the frequencies associated with different pieces of reference point information are the same. In another embodiment, the reference point information corresponds to a distance threshold, and the frequencies associated with the distance thresholds corresponding to different pieces of reference point information are the same, or the frequencies associated with the distance thresholds corresponding to different pieces of reference point information are different. In another embodiment, the frequencies associated with different pieces of reference point information and the distance thresholds corresponding to the different pieces of reference point information are the same, or the frequencies associated with different pieces of reference point information and the distance thresholds corresponding to the different pieces of reference point information are different from each other.
In some embodiments, the configuration information is a system message. The network device sends a system message to the terminal, to configure at least one piece of reference point information and the distance threshold corresponding to each of the at least one piece of reference point information for the terminal via the system message.
In some embodiments, the configuration information is a Radio Resource Control release (RRC release) message. The network device sends an RRC release message to the terminal to configure at least one piece of reference point information and the distance threshold corresponding to each of the at least one piece of reference point information for the terminal via the RRC release message.
Step 202: The terminal receives the configuration information sent by the network device, in which the configuration information includes at least one piece of reference point information and a distance threshold corresponding to every one of the at least one piece of reference point information, and the at least one piece of reference point information and/or the distance threshold corresponding to the every piece of reference point information is associated with at least one frequency.
In an embodiment of the application, the network device configures reference point information and a distance threshold corresponding to the reference point information for the terminal by sending configuration information. After the terminal receives the configuration information sent by the network device, the terminal can determine the reference point information and the distance threshold corresponding to the reference point information according to the configuration information, and can also determine the frequency associated with each piece of reference point information and/or the frequency associated with each piece of reference point information and the distance threshold corresponding to the reference point information.

Step 203: The terminal performs a neighboring cell measurement based on at least one piece of reference point information and a distance threshold corresponding to every one of the at least one piece of reference point information.

In this embodiment of the present application, the terminal determines at least one piece of reference point information and a distance threshold corresponding to every one of the at least one piece of reference point information, and the terminal performs neighboring cell measurement according to the at least one piece of reference point information and the distance threshold corresponding to the every piece of reference point information. It can also be understood that the terminal can determine its own position, and the terminal performs the neighboring cell measurement according to its own position, reference point information, and the distance threshold corresponding to the reference point information.

In some embodiments, at least one piece of reference point information indicates a position of a neighboring cell. For each neighboring cell, the neighboring cell covers a certain area, and the reference point is set in the neighboring cell to indicate the position of the neighboring cell. For the terminal, the terminal can determine the distance between the terminal and the neighboring cell according to its own position and the position of the neighboring cell indicated by the reference point information, and then perform a neighboring cell measurement according to the determined distance and the distance threshold corresponding to the reference point information.

Optionally, the reference point information is the center position of the neighboring cell, or the reference point information is the position of the neighboring cell where the signal quality is the highest, or is other position of the neighboring cell, which is not limited in the embodiments of the present application.

In some embodiments, the network device and the at least one piece of reference point information belong to different types of networks. That is, each piece of reference point information in the at least one piece of reference point information belongs to one type of network, and the network device belongs to one type of network, and the type of network to which the network device belongs is different from the type of network to which the at least one piece of reference point information belongs.

Optionally, the network device belongs to an NTN. At least one piece of reference point information and a distance threshold corresponding to every one of the at least one piece of reference point information belong to a TN.

In an embodiment of the present application, the network device and the terminal can communicate with each other, that is, the cell covered by the network device is the serving cell of the terminal, the serving cell where the terminal is located is an NTN type network, and the neighboring cell is a TN type network. The terminal needs to measure the TN type neighboring cell.

It should be noted that the steps executed by the network device can form an embodiment independently, and the steps executed by the terminal can also form an embodiment independently, and this application is not limited in this regard.

In the solution provided in this embodiment of the present application, the network device configures reference point information and a distance threshold corresponding to each piece of reference point information for the terminal, so that the terminal performs a neighboring cell measurement based on the reference point information and the distance threshold corresponding to the reference point information. A method for neighboring cell measurement is provided, which ensures the measurement of neighboring cells, and the cell measurement is performed based on the reference point information and the distance threshold corresponding to the reference point information, thereby improving the accuracy of cell measurement.

The present application also provides a neighboring cell measurement method, in which a terminal performs neighboring cell measurement based on at least one piece of reference point information and a distance threshold corresponding to every one of the at least one piece of reference point information, in which the terminal determines whether to perform the neighboring cell measurement on the frequency associated with the reference point information according to the priority of the frequency and the distance between the terminal and the position indicated by the reference point information.

In some embodiments, in a case that a reselection priority of a first frequency associated with a reference point information and/or a distance threshold corresponding to the reference point information is higher than a priority of a second frequency of a current serving cell, and a distance between the terminal and a position indicated by the reference point information is less than or equal to the distance threshold, the neighboring cell measurement is performed on the first frequency.

With respect to the above embodiments, the terminal performs the neighboring cell measurement on the first frequency in the following three situations.

(1) When the reselection priority of the first frequency associated with the reference point information is higher than a priority of a second frequency of a current serving cell and the distance between the terminal and the position indicated by the reference point information is less than or equal to the distance threshold, the neighboring cell measurement is performed on the first frequency.

In an embodiment of the present application, the first frequency associated with the reference point information has a priority, and the second frequency of the serving cell in which the terminal is currently located also has a priority. If the reselection priority of the first frequency associated with the reference point information is higher than the priority of the second frequency of the current serving cell, it means that the priority of performing the neighboring cell measurement on the first frequency associated with the reference point information is high. Since it is necessary to consider the distance between the terminal and the reference point in determining whether to perform the neighboring cell measurement on the first frequency, the neighboring cell measurement is performed on the first frequency associated with the reference point information when the distance between the terminal and the position indicated by the reference point information is less than or equal to the distance threshold.

If the distance between the terminal and the position indicated by the reference point information is less than or equal to the distance threshold, it means that the terminal is located within the coverage range of the neighboring cell indicated by the reference point information. Since the first frequency associated with the reference point information has a high priority and the terminal is also located within the coverage range of the neighboring cell indicated by the reference point information, the terminal can perform the neighboring cell measurement on the first frequency associated with the reference point information.

(2) When the reselection priority of the first frequency associated with the distance threshold corresponding to the reference point information is higher than a priority of a second frequency of a current serving cell, and the distance between the terminal and the position indicated by the reference point information is less than or equal to the distance threshold, the neighboring cell measurement is performed on the first frequency.

In an embodiment of the present application, the first frequency associated with the distance threshold corresponding to the reference point information has a priority, and the second frequency of the serving cell in which the terminal is currently located also has a priority. If the reselection priority of the first frequency associated with the distance threshold corresponding to the reference point information is higher than the priority of the second frequency of the current serving cell, it means that the priority of performing the neighboring cell measurement on the first frequency associated with the distance threshold corresponding to the reference point information is high. Since it is necessary to consider the distance between the terminal and the reference point in determining whether to perform the neighboring cell measurement on the first frequency, the neighboring cell measurement is performed on the first frequency associated with the distance threshold corresponding to the reference point information when the distance between the terminal and the position indicated by the reference point information is less than or equal to the distance threshold.

If the distance between the terminal and the position indicated by the reference point information is less than or equal to the distance threshold, it means that the terminal is located within the coverage range of the neighboring cell indicated by the reference point information. Since the first frequency associated with the distance threshold corresponding to the reference point information has a high priority, and the terminal is also located within the coverage range of the neighboring cell indicated by the reference point information, the terminal can perform the neighboring cell measurement on the first frequency associated with the distance threshold corresponding to the reference point information.

(3) When the reselection priority of the first frequency associated with the reference point information and the distance threshold corresponding to the reference point information is higher than a priority of a second frequency of a current serving cell, and the distance between the terminal and the position indicated by the reference point information is less than or equal to the distance threshold, the neighboring cell measurement is performed on the first frequency.

In an embodiment of the present application, the first frequency associated with the reference point information and the distance threshold corresponding to the reference point information has a priority, and the second frequency of the serving cell in which the terminal is currently located also has a priority. If the reselection priority of the first frequency associated with the reference point information and the distance threshold corresponding to the reference point information is higher than the priority of the second frequency of the current serving cell, it means that the priority of performing the neighboring cell measurement on the first frequency associated with the reference point information and the distance threshold corresponding to the reference point information is high. Since it is necessary to consider the distance between the terminal and the reference point in determining whether to perform the neighboring cell measurement on the first frequency, the neighboring cell measurement is performed on the first frequency associated with the reference point information and the distance threshold corresponding to the reference point information when the distance between the terminal and the position indicated by the reference point information is less than or equal to the distance threshold.

If the distance between the terminal and the position indicated by the reference point information is less than or equal to the distance threshold, it means that the terminal is located within the coverage range of the neighboring cell indicated by the reference point information. Since the first frequency associated with the reference point information and the distance threshold corresponding to the reference point information has a high priority, and the terminal is also located within the coverage range of the neighboring cell indicated by the reference point information, the terminal can perform the neighboring cell measurement on the first frequency associated with the reference point information and the distance threshold corresponding to the reference point information.

The embodiments of the present application provide a method for measuring neighboring cells, which ensures the measurement of neighboring cells, and the cell measurement is performed based on reference point information and the distance threshold corresponding to the reference point information, thereby avoiding unnecessary neighboring cell measurements and reducing the power consumption of the terminal. In addition, when the terminal determines that the reselection priority of the first frequency is higher than the priority of the second frequency of the serving cell, and the distance between the terminal and the position indicated by the reference point information associated with the first frequency is less than or equal to the distance threshold, the terminal performs the neighboring cell measurement on the first frequency, thereby preventing the situation that the neighboring cell measurement is still performed on the first frequency when the distance between the terminal and the neighboring cell corresponding to the first frequency is greater than the distance threshold, thereby saving terminal measurement resources.

It should be noted that the embodiments of the present application are described by taking the terminal performing the neighboring cell measurement on the first frequency associated with the reference point as an example, while in other embodiments, there are situations where the terminal does not perform the neighboring cell measurement on the first frequency.

Optionally, the terminal does not perform the neighboring cell measurement on the first frequency when the reselection priority of the first frequency associated with the reference point information and/or the distance threshold corresponding to the reference point information is higher than a priority of a second frequency of a current serving cell, and the distance between the terminal and the position indicated by the reference point information is greater than the distance threshold.

The terminal does not perform the neighboring cell measurement on the first frequency associated with the reference point information in the following three situations.

(1) In a case that the reselection priority of the first frequency associated with the reference point information is higher than a priority of a second frequency of a current serving cell and the distance between the terminal and the position indicated by the reference point information is greater than the distance threshold, the neighboring cell measurement is not performed on the first frequency.

In an embodiment of the present application, the first frequency associated with the reference point information has a priority, and the second frequency of the serving cell in which the terminal is currently located also has a priority. If the reselection priority of the first frequency associated with the reference point information is higher than the priority of the second frequency of the current serving cell, it means that the priority of performing the neighboring cell measurement on the first frequency associated with the reference point information is high. Since it is necessary to consider the distance between the terminal and the reference point in determining whether to perform the neighboring cell measurement on the first frequency, the neighboring cell measurement is not performed on the first frequency associated with the reference point information when the distance between the terminal and the position indicated by the reference point information is greater than the distance threshold.

If the distance between the terminal and the position indicated by the reference point information is greater than the distance threshold, it means that the terminal is outside the coverage of the neighboring cell indicated by the reference point information. Considering that the terminal is outside the coverage of the neighboring cell indicated by the reference point information, the terminal does not perform the neighboring cell measurement on the first frequency associated with the reference point information even if the priority of the first frequency associated with the reference point information is high.

(2) In a case that the reselection priority of the first frequency associated with the distance threshold corresponding to the reference point information is higher than a priority of a second frequency of a current serving cell, and the distance between the terminal and the position indicated by the reference point information is greater than the distance threshold, the neighboring cell measurement is not performed on the first frequency.

In an embodiment of the present application, the first frequency associated with the distance threshold corresponding to the reference point information has a priority, and the second frequency of the serving cell in which the terminal is currently located also has a priority. If the reselection priority of the first frequency associated with the distance threshold corresponding to the reference point information is higher than the priority of the second frequency of the current serving cell, it means that the priority of performing the neighboring cell measurement on the first frequency associated with the distance threshold corresponding to the reference point information is high. Since it is necessary to consider the distance between the terminal and the reference point in determining whether to perform the neighboring cell measurement on the first frequency, the neighboring cell measurement is not performed on the first frequency associated with the distance threshold corresponding to the reference point information when the distance between the terminal and the position indicated by the reference point information is greater than the distance threshold.

If the distance between the terminal and the position indicated by the reference point information is greater than the distance threshold, it means that the terminal is outside the coverage of the neighboring cell indicated by the reference point information. Considering that the terminal is outside the coverage of the neighboring cell indicated by the reference point information, the terminal does not perform the neighboring cell measurement on the first frequency associated with the distance threshold corresponding to the reference point information even if the first frequency associated with the distance threshold corresponding to the reference point information has a high priority.

(3) In a case that the reselection priority of the first frequency associated with the reference point information and the distance threshold corresponding to the reference point information is higher than a priority of a second frequency of a current serving cell, and the distance between the terminal and the position indicated by the reference point information is greater than the distance threshold, the neighboring cell measurement is not performed on the first frequency.

In an embodiment of the present application, the first frequency associated with the reference point information and the distance threshold corresponding to the reference point information has a priority, and the second frequency of the serving cell in which the terminal is currently located also has a priority. If the reselection priority of the first frequency associated with the reference point information and the distance threshold corresponding to the reference point information is higher than the priority of the second frequency of the current serving cell, it means that the priority of performing the neighboring cell measurement on the first frequency associated with the reference point information and the distance threshold corresponding to the reference point information is high. Since it is necessary to consider the distance between the terminal and the reference point in determining whether to perform the neighboring cell measurement on the first frequency, the neighboring cell measurement is not performed on the first frequency associated with the reference point information and the distance threshold corresponding to the reference point information when the distance between the terminal and the position indicated by the reference point information is greater than the distance threshold.

If the distance between the terminal and the position indicated by the reference point information is greater than the distance threshold, it means that the terminal is outside the coverage of the neighboring cell indicated by the reference point information. Considering that the terminal is outside the coverage of the neighboring cell indicated by the reference point information, the terminal does not perform the neighboring cell measurement on the first frequency associated with the reference point information and the distance threshold corresponding to the reference point information even if the first frequency associated with the reference point information and the distance threshold corresponding to the reference point information has a high priority.

In the solution provided by this embodiment of the present application, when the terminal determines that the reselection priority of the first frequency is higher than the priority of the second frequency of the serving cell, and the distance between the terminal and the position indicated by the reference point information associated with the first frequency is greater than the distance threshold, the terminal does not perform the neighboring cell measurement on the first frequency, so as to prevent the situation where the neighboring cell measurement is still performed on the first frequency when the distance between the terminal and the neighboring cell corresponding to the first frequency is greater than the distance threshold, thereby saving terminal measurement resources.

The present application also provides a neighboring cell measurement method, in which a terminal performs neighboring cell measurement based on at least one piece of reference point information and at least one distance threshold corresponding to the at least one piece of reference point information. One frequency is associated with multiple pieces of reference point information, and the terminal still determines whether to perform the neighboring cell measurement on the frequency associated with the reference point information based on the priority of the frequency and the distance between the terminal and the position indicated by the reference point information.

If a frequency is associated with multiple pieces of reference point information, that is, the frequencies associated with the multiple pieces of reference point information are the same, and each piece of reference point information indicates at least one neighboring cell, it means that the frequencies of the neighboring cells indicated by the multiple pieces of reference point information are the same.

In some embodiments, the terminal performs the neighboring cell measurement on a first frequency when the first frequency is associated with multiple pieces of reference point information and/or the distance thresholds corresponding to the multiple pieces of reference point information, the reselection priority of the first frequency is higher than the priority of the second frequency of the current serving cell, and a distance between a position corresponding to at least one piece of reference point information in the multiple pieces of reference point information and the terminal is less than or equal to a distance threshold corresponding to the at least one piece of reference point information in the multiple pieces of reference point information.

The terminal performs the neighboring cell measurement on the first frequency associated with the multiple pieces of reference point information in the following three situations.

(1) In a case that the first frequency is associated with multiple pieces of reference point information, the reselection priority of the first frequency is higher than a priority of a second frequency of a current serving cell, and the distance between a position corresponding to at least one piece of reference point information in the multiple pieces of reference point information and the terminal is less than or equal to a distance threshold corresponding to the at least one piece of reference point information in the multiple pieces of reference point information, the neighboring cell measurement is performed on the first frequency.

In an embodiment of the present application, the first frequency associated with multiple pieces of reference point information has a priority, and the second frequency of the serving cell in which the terminal is currently located also has a priority. If the reselection priority of the first frequency associated with multiple pieces of reference point information is higher than the priority of the second frequency of the current serving cell, it means that the priority of performing the neighboring cell measurement on the first frequency is high. Since it is necessary to consider the distance between the terminal and the reference point in determining whether to perform the neighboring cell measurement on the first frequency, if the distance between the position corresponding to at least one piece of reference point information in the multiple pieces of reference point information and the terminal is less than or equal to the configured distance threshold corresponding to the at least one piece of reference point information in the multiple pieces of reference point information, the neighboring cell measurement is performed on the first frequency associated with the multiple pieces of reference point information.

If the distance between the terminal and the position indicated by the reference point information is less than or equal to the distance threshold, it means that the terminal is located within the coverage range of the neighboring cell indicated by the reference point information. Since the priority of the first frequency is high and the terminal is also located within the coverage range of the neighboring cell indicated by at least one piece of reference point information in multiple pieces of reference point information, the terminal can perform the neighboring cell measurement on the first frequency.

For example, reference point information 1, reference point information 2 and reference point information 3 are all associated with a frequency 1, and the distance thresholds corresponding to reference point information 1, reference point information 2 and reference point information 3 are all 50 meters, while the distance between the terminal and the position indicated by reference point information 1 is 40 meters, the distance between the terminal and the position indicated by reference point information 2 is 70 meters, and the distance between the terminal and the position indicated by reference point information 3 is 60 meters. It can be determined that the distance between the position indicated by the reference point information 1 among the reference point information 1, the reference point information 2 and the reference point information 3 and the terminal is less than 50 meters, so the terminal can perform the neighboring cell measurement on the frequency 1.

(2) In a case that the first frequency is associated with distance thresholds corresponding to multiple pieces of reference point information, the reselection priority of the first frequency is higher than a priority of a second frequency of a current serving cell, and the distance between the position corresponding to at least one piece of reference point information in the multiple pieces of reference point information and the terminal is less than or equal to the distance threshold corresponding to at least one piece of reference point information in the multiple pieces of reference point information, the neighboring cell measurement is performed on the first frequency.

In an embodiment of the present application, the first frequency associated with the distance thresholds corresponding to multiple pieces of reference point information has a priority, and the second frequency of the serving cell in which the terminal is currently located also has a priority. If the reselection priority of the first frequency associated with the distance thresholds corresponding to the multiple pieces of reference point information is higher than the priority of the second frequency of the current serving cell, it means that the priority of performing the neighboring cell measurement on the first frequency is high. Since it is necessary to consider the distance between the terminal and the reference point in determining whether to perform the neighboring cell measurement on the first frequency, if the distance between the position corresponding to at least one piece of reference point information in the multiple pieces of reference point information and the terminal is less than or equal to the configured distance threshold corresponding to the at least one piece of reference point information in the multiple pieces of reference point information, the neighboring cell measurement is performed on the first frequency associated with the multiple pieces of reference point information.

If the distance between the terminal and the position indicated by at least one piece of reference point information in the multiple pieces of reference point information is less than or equal to the distance threshold, it means that the terminal is located within the coverage range of the neighboring cell indicated by the at least one piece of reference point information in the multiple pieces of reference point information. Since the priority of the first frequency is high and the terminal is also located within the coverage range of the neighboring cell indicated by at least one piece of reference point information in multiple pieces of reference point information, the terminal can perform the neighboring cell measurement on the first frequency.

For example, a distance threshold 1 corresponding to reference point information 1, a distance threshold 2 corresponding to reference point information 2, and a distance threshold 3 corresponding to reference point information 3 are all associated with a frequency 1, and the distance threshold 1, the distance threshold 2, and the distance threshold 3 are all 50 meters, while the distance between the terminal and the position indicated by reference point information 1 is 40 meters, the distance between the terminal and the position indicated by reference point information 2 is 70 meters, and the distance between the terminal and the position indicated by reference point information 3 is 60 meters. It can be determined that the distance between the position indicated by the reference point information 1 among reference point information 1, reference point information 2, and reference point information 3 and the terminal is less than 50 meters, so the terminal can perform the neighboring cell measurement on the frequency 1.

(3) In a case that the first frequency is associated with multiple pieces of reference point information and distance thresholds corresponding to the multiple pieces of reference point information, the reselection priority of the first frequency is higher than a priority of a second frequency of a current serving cell, and the distance between the position corresponding to at least one piece of reference point information in the multiple pieces of reference point information and the terminal is less than or equal to the distance threshold corresponding to the at least one piece of reference point information in the multiple pieces of reference point information, the neighboring cell measurement is performed on the first frequency.

In an embodiment of the present application, the first frequency associated with multiple pieces of reference point information and the distance thresholds corresponding to the multiple pieces of reference point information has a priority, and the second frequency of the serving cell in which the terminal is currently located also has a priority. If the reselection priority of the first frequency associated with multiple pieces of reference point information and the distance thresholds corresponding to the multiple pieces of reference point information is higher than the priority of the second frequency of the current serving cell, it means that the priority of performing the neighboring cell measurement on the first frequency is high. Since it is necessary to consider the distance between the terminal and the reference point in determining whether to perform the neighboring cell measurement on the first frequency, if the distance between the position corresponding to at least one piece of reference point information in the multiple pieces of reference point information and the terminal is less than or equal to the configured distance threshold corresponding to the at least one piece of reference point information in the multiple pieces of reference point information, the neighboring cell measurement is performed on the first frequency associated with the multiple pieces of reference point information.

If the distance between the terminal and the position indicated by the at least one piece of reference point information in the multiple pieces of reference point information is less than or equal to the distance threshold, it means that the terminal is located within the coverage range of the neighboring cell indicated by the at least one piece of reference point information in the multiple pieces of reference point information. Since the priority of the first frequency is high and the terminal is also located within the coverage range of the neighboring cell indicated by at least one piece of reference point information in multiple pieces of reference point information, the terminal can perform the neighboring cell measurement on the first frequency.

The embodiments of the present application provide a method for measuring neighboring cells, which ensures the measurement of neighboring cells, and the cell measurement is performed based on reference point information and the distance threshold corresponding to the reference point information, thereby avoiding unnecessary neighboring cell measurements and reducing the power consumption of the terminal. In addition, when the terminal determines that the reselection priority of the first frequency is higher than the priority of the second frequency of the serving cell, and the distance between the position indicated by at least one piece of reference point information in the multiple pieces of reference point information associated with the first frequency and the terminal is less than or equal to the distance threshold corresponding to the at least one piece of reference point information in the multiple pieces of reference point information, the terminal performs the neighboring cell measurement on the first frequency, preventing the situation that the neighboring cell measurement is still performed on the first frequency when the distance between the terminal and the reference point corresponding to the first frequency is greater than the distance threshold, thereby saving terminal measurement resources.

It should be noted that the embodiments of the present application are described by taking the terminal performing the neighboring cell measurement on the first frequency associated with the reference points as an example, while in other embodiments, there are situations where the terminal does not perform the neighboring cell measurement on the first frequency.

Optionally, in a case that the first frequency is associated with multiple pieces of reference point information and/or the distance thresholds corresponding to multiple pieces of reference point information, the reselection priority of the first frequency is higher than the priority of the second frequency of the current serving cell, and a distance between a position corresponding to each piece of reference point information in the multiple pieces of reference point information and the terminal is greater than a distance threshold corresponding to the each piece of reference point information in the multiple pieces of reference point information, the neighboring cell measurement is not performed on the first frequency.

The terminal does not perform the neighboring cell measurement on the first frequency associated with the reference point information in the following three situations.

(1) In a case that a first frequency is associated with multiple pieces of reference point information, the reselection priority of the first frequency is higher than a priority of a second frequency of a current serving cell, and a distance between a position corresponding to each piece of reference point information in the multiple pieces of reference point information and the terminal is greater than a distance threshold corresponding to the each piece of reference point information in the multiple pieces of reference point information, the neighboring cell measurement is not performed on the first frequency.

In an embodiment of the present application, the first frequency associated with multiple pieces of reference point information has a priority, and the second frequency of the serving cell in which the terminal is currently located also has a priority. If the reselection priority of the first frequency associated with multiple pieces of reference point information is higher than the priority of the second frequency of the current serving cell, it means that the priority of performing the neighboring cell measurement on the first frequency is high. Since it is necessary to consider the distance between the terminal and the reference point in determining whether to perform the neighboring cell measurement on the first frequency, if the distance between the position corresponding to each piece of reference point information in the multiple pieces of reference point information and the terminal is greater than the configured distance threshold corresponding to the each piece of reference point information in the multiple pieces of reference point information, the neighboring cell measurement is not performed on the first frequency associated with the multiple pieces of reference point information.

If the distance between the terminal and the position indicated by the reference point information is greater than the distance threshold, it means that the terminal is not within the coverage of the neighboring cell indicated by the reference point information. Considering that the terminal is not within the coverage of the neighboring cells indicated by the multiple pieces of reference point information, the terminal does not perform the neighboring cell measurement on the first frequency even if the priority of the first frequency is high.

For example, reference point information 1, reference point information 2 and reference point information 3 are all associated with a frequency 1, and the distance thresholds corresponding to reference point information 1, reference point information 2 and reference point information 3 are all 50 meters, while the distance between the terminal and the position indicated by reference point information 1 is 55 meters, the distance between the terminal and the position indicated by reference point information 2 is 70 meters, and the distance between the terminal and the position indicated by reference point information 3 is 60 meters. It can be determined that the distances between the positions indicated by reference point information 1, reference point information 2 and reference point information 3 and the terminal are all greater than 50 meters, so the terminal does not perform the neighboring cell measurement on the frequency 1.

(2) In a case that a first frequency is associated with distance thresholds corresponding to multiple pieces of reference point information, the reselection priority of the first frequency is higher than a priority of a second frequency of a current serving cell, and a distance between a position corresponding to each piece of reference point information in the multiple pieces of reference point information and the terminal is greater than a distance threshold corresponding to the each piece of reference point information in the multiple pieces of reference point information, the neighboring cell measurement is not performed on the first frequency.

In an embodiment of the present application, the first frequency associated with the distance thresholds corresponding to multiple pieces of reference point information has a priority, and the second frequency of the serving cell in which the terminal is currently located also has a priority. If the reselection priority of the first frequency associated with the distance thresholds corresponding to the multiple pieces of reference point information is higher than the priority of the second frequency of the current serving cell, it means that the priority of performing the neighboring cell measurement on the first frequency is high. Since it is necessary to consider the distance between the terminal and the reference point in determining whether to perform the neighboring cell measurement on the first frequency, if the distance between the position corresponding to each piece of reference point information in the multiple pieces of reference point information and the terminal is greater than the configured distance threshold corresponding to the each piece of reference point information in the multiple pieces of reference point information, the neighboring cell measurement is not performed on the first frequency associated with the multiple pieces of reference point information.

If the distance between the terminal and the position indicated by each piece of reference point information in the multiple pieces of reference point information is greater than the distance threshold, it means that the terminal is not within the coverage range of the neighboring cell indicated by the each piece of reference point information in the multiple pieces of reference point information. Considering that the terminal is not within the coverage range of the neighboring cells indicated by the multiple pieces of reference point information, the terminal does not perform the neighboring cell measurement on the first frequency even if the priority of the first frequency is high.

(3) In a case that a first frequency is associated with multiple pieces of reference point information and distance thresholds corresponding to the multiple pieces of reference point information, the reselection priority of the first frequency is higher than a priority of a second frequency of a current serving cell, and a distance between a position corresponding to each piece of reference point information in the multiple pieces of reference point information and the terminal is greater than a distance threshold corresponding to the each piece of reference point information in the multiple pieces of reference point information, the neighboring cell measurement is not performed on the first frequency.

In an embodiment of the present application, the first frequency associated with multiple pieces of reference point information and the distance thresholds corresponding to the multiple pieces of reference point information has a priority, and the second frequency of the serving cell in which the terminal is currently located also has a priority. If the reselection priority of the first frequency associated with multiple pieces of reference point information and the distance thresholds corresponding to the multiple pieces of reference point information is higher than the priority of the second frequency of the current serving cell, it means that the priority of performing the neighboring cell measurement on the first frequency is high. Since it is necessary to consider the distance between the terminal and the reference point in determining whether to perform the neighboring cell measurement on the first frequency, if the distance between the position corresponding to each piece of reference point information in the multiple pieces of reference point information and the terminal is greater than the configured distance threshold corresponding to the each piece of reference point information in the multiple pieces of reference point information, the neighboring cell measurement is not performed on the first frequency associated with the multiple pieces of reference point information.

If the distance between the terminal and the position indicated by the each piece of reference point information in the multiple pieces of reference point information is greater than the distance threshold, it means that the terminal is not within the coverage range of the neighboring cell indicated by the each piece of reference point information in the multiple pieces of reference point information. Considering that the terminal is not within the coverage range of the neighboring cells indicated by multiple pieces of reference point information, the terminal does not perform the neighboring cell measurement on the first frequency even if the priority of the first frequency is high.

In the solution provided by the embodiments of the present application, in a case that the terminal determines that the reselection priority of the first frequency is higher than the priority of the second frequency of the serving cell, and the distance between the position indicated by at least one piece of reference point information in the multiple pieces of reference point information associated with the first frequency and the terminal is less than or equal to the distance threshold corresponding to the at least one piece of reference point information in the multiple pieces of reference point information, the terminal performs the neighboring cell measurement on the first frequency, to prevent the situation where the terminal still performs the neighboring cell measurement on the first frequency when the distances between the terminal and the neighboring cells corresponding to the first frequency are greater than the distance threshold, thereby saving terminal measurement resources.

The present application also provides a neighboring cell measurement method, in which a terminal performs neighboring cell measurement based on at least one piece of reference point information and at least one distance threshold corresponding to the at least one piece of reference point information, in which the terminal determines whether to perform the neighboring cell measurement on the frequency associated with the reference point information according to the priority of the frequency and the distance between the terminal and the position indicated by the reference point information.

In some embodiments, in a case that the reselection priority of the first frequency associated with the reference point information and/or the distance threshold corresponding to the reference point information is the same as the priority of the second frequency of the current serving cell, the signal quality of the current serving cell meets the quality condition, and a distance between the terminal and a position corresponding to the reference point information is less than or equal to the distance threshold corresponding to the reference point information, the neighboring cell measurement is performed on the first frequency.

The terminal performs the neighboring cell measurement on the first frequency in the following three situations.

(1) In a case that the reselection priority of the first frequency associated with the reference point information is the same as a priority of a second frequency of a current serving cell, a signal quality of the current serving cell meets a quality condition, and a distance between the terminal and a position corresponding to the reference point information is less than or equal to the distance threshold corresponding to the reference point information, the neighboring cell measurement is performed on the first frequency.

The quality condition is used for indicating the signal quality requirement of the serving cell. The signal quality of the serving cell meeting the quality condition indicates that the terminal can communicate via the serving cell.

In some embodiments, the quality condition is that a cell selection electrical level of the serving cell is greater than a preset electrical level, and a cell selection quality of the serving cell is greater than a preset quality.

The preset electrical level and the preset quality are determined by a protocol or preconfigured by a network device, and are not limited in the embodiments of the present application.

In an embodiment of the present application, the first frequency associated with the reference point information has a priority, and the second frequency of the serving cell in which the terminal is currently located also has a priority. If the reselection priority of the first frequency associated with the reference point information is the same as the priority of the second frequency of the current serving cell, and the signal quality of the current serving cell meets the quality condition, it means that the serving cell in which the terminal is currently located meets the communication conditions. Since there is also a certain distance between the terminal and the reference point, it is necessary to consider the distance between the terminal and the reference point in determining whether to perform the neighboring cell measurement on the first frequency associated with the reference point information. Therefore, when the distance between the terminal and the position indicated by the reference point information is less than or equal to the distance threshold, the neighboring cell measurement is performed on the first frequency associated with the reference point information.

If the distance between the terminal and the position indicated by the reference point information is less than or equal to the distance threshold, it means that the terminal is located in the coverage range of the neighboring cell indicated by the reference point information. Even if the priority of the frequency associated with the reference point information is the same as the priority of the second frequency of the current serving cell, and the signal quality of the current serving cell meets the quality condition, if the neighboring cell indicated by the reference point information is a TN network, the terminal may preferentially camp on the TN network, so the terminal performs the neighboring cell measurement on the first frequency associated with the reference point information.

(2) In a case that the reselection priority of the first frequency associated with the distance threshold corresponding to the reference point information is the same as a priority of a second frequency of a current serving cell, a signal quality of the current serving cell meets a quality condition, and a distance between the terminal and a position corresponding to the reference point information is less than or equal to the distance threshold corresponding to the reference point information, the neighboring cell measurement is performed on the first frequency.

The quality condition is used for indicating the signal quality requirement of the serving cell. The signal quality of the serving cell meeting the quality condition indicates that the terminal can communicate via the serving cell.

In some embodiments, the quality condition is that a cell selection electrical level of the serving cell is greater than a preset electrical level, and a cell selection quality of the serving cell is greater than a preset quality.

The preset electrical level and the preset quality are determined by a protocol or preconfigured by a network device, and are not limited in the embodiments of the present application.

In an embodiment of the present application, the first frequency associated with the distance threshold corresponding to the reference point information has a priority, and the second frequency of the serving cell in which the terminal is currently located also has a priority. If the reselection priority of the first frequency associated with the distance threshold corresponding to the reference point information is the same as the priority of the second frequency of the current serving cell, and the signal quality of the current serving cell meets the quality condition, it means that the serving cell in which the terminal is currently located meets the communication conditions. Since there is also a certain distance between the terminal and the reference point, it is necessary to consider the distance between the terminal and the reference point in determining whether to perform the neighboring cell measurement on the first frequency associated with the distance threshold corresponding to the reference point information. Therefore, when the distance between the terminal and the position indicated by the reference point information is less than or equal to the distance threshold, the neighboring cell measurement is performed on the first frequency associated with the distance threshold corresponding to the reference point information.

If the distance between the terminal and the position indicated by the reference point information is less than or equal to the distance threshold, it means that the terminal is located within the coverage range of the neighboring cell indicated by the reference point information. Even if the priority of the first frequency associated with the distance threshold corresponding to the reference point information is the same as the priority of the second frequency of the current serving cell, and the signal quality of the current serving cell meets the quality condition, but the terminal is located within the coverage range of the neighboring cell indicated by the reference point information, if the neighboring cell indicated by the reference point information is a TN network, the terminal may preferentially camp on the TN network. Therefore, the terminal performs the neighboring cell measurement on the first frequency associated with the distance threshold corresponding to the reference point information.

(3) In a case that the reselection priority of the first frequency associated with the reference point information and the distance threshold corresponding to the reference point information is the same as a priority of a second frequency of a current serving cell, a signal quality of the current serving cell meets a quality condition, and a distance between the terminal and a position corresponding to the reference point information is less than or equal to the distance threshold corresponding to the reference point information, the neighboring cell measurement is performed on the first frequency.

The quality condition is used for indicating the signal quality requirement of the serving cell. The signal quality of the serving cell meeting the quality condition indicates that the terminal can communicate via the serving cell.

In some embodiments, the quality condition is that a cell selection electrical level of the serving cell is greater than a preset electrical level, and a cell selection quality of the serving cell is greater than a preset quality.

The preset electrical level and the preset quality are determined by a protocol or preconfigured by a network device, and are not limited in the embodiments of the present application.

In an embodiment of the present application, the first frequency associated with the reference point information and the distance threshold corresponding to the reference point information has a priority, and the second frequency of the serving cell in which the terminal is currently located also has a priority. If the reselection priority of the first frequency associated with the reference point information and the distance threshold corresponding to the reference point information is the same as the priority of the second frequency of the current serving cell, and the signal quality of the current serving cell meets the quality condition, it means that the serving cell in which the terminal is currently located meets the communication condition. Since there is also a certain distance between the terminal and the reference point, it is necessary to consider the distance between the terminal and the reference point in determining whether to perform the neighboring cell measurement on the first frequency associated with the reference point information and the distance threshold corresponding to the reference point information. Therefore, when the distance between the terminal and the position indicated by the reference point information is less than or equal to the distance threshold, the neighboring cell measurement is performed on the first frequency associated with the reference point information and the distance threshold corresponding to the reference point information.

If the distance between the terminal and the position indicated by the reference point information is less than or equal to the distance threshold, it means that the terminal is located within the coverage range of the neighboring cell indicated by the reference point information. Even if the priority of the first frequency associated with the reference point information and the distance threshold corresponding to the reference point information is the same as the priority of the second frequency of the current serving cell, and the signal quality of the current serving cell meets the quality condition, but the terminal is located within the coverage range of the neighboring cell indicated by the reference point information, if the neighboring cell indicated by the reference point information is a TN network, the terminal may preferentially camp on the TN network. Therefore, the terminal performs the neighboring cell measurement on the first frequency associated with the reference point information and the distance threshold corresponding to the reference point information.

The embodiments of the present application provide a method for measuring neighboring cells, which ensures the measurement of neighboring cells, and the cell measurement is performed based on reference point information and the distance threshold corresponding to the reference point information, thereby improving the accuracy of cell measurement. In addition, when the terminal determines that a reselection priority of the first frequency is the same as the priority of the second frequency of the serving cell, and the signal quality of the serving cell meets the quality condition, if the distance between the terminal and the position indicated by the reference point information associated with the first frequency is less than or equal to the distance threshold, the terminal will still perform the neighboring cell measurement on the first frequency, thereby improving the efficiency of the terminal in performing a neighboring cell measurement and reselecting a neighboring cell.

It should be noted that the embodiments of the present application are described by taking the terminal performing the neighboring cell measurement on the first frequency associated with the reference point as an example, while in other embodiments, there are situations where the terminal does not perform the neighboring cell measurement on the first frequency.

Optionally, in a case that the reselection priority of the first frequency associated with the reference point information and/or the distance threshold corresponding to the reference point information is the same as the priority of the second frequency of the current serving cell, the signal quality of the current serving cell meets the quality condition, and a distance between the terminal and a position corresponding to the reference point information is greater than the distance threshold corresponding to the reference point information, the neighboring cell measurement is not performed on the first frequency.

The terminal does not perform the neighboring cell measurement on the first frequency in the following three situations.

(1) In a case that the reselection priority of the first frequency associated with the reference point information is the same as a priority of a second frequency of a current serving cell, a signal quality of the current serving cell meets a quality condition, and a distance between the terminal and a position corresponding to the reference point information is greater than the distance threshold corresponding to the reference point information, the neighboring cell measurement is not performed on the first frequency.

The quality condition is used for indicating the signal quality requirement of the serving cell. The signal quality of the serving cell meeting the quality condition indicates that the terminal can communicate via the serving cell.

In some embodiments, the quality condition is that a cell selection electrical level of the serving cell is greater than a preset electrical level, and a cell selection quality of the serving cell is greater than a preset quality.

The preset electrical level and the preset quality are determined by a protocol or preconfigured by a network device, and are not limited in the embodiments of the present application.

In an embodiment of the present application, the first frequency associated with the reference point information has a priority, and the second frequency of the serving cell in which the terminal is currently located also has a priority. If the reselection priority of the first frequency associated with the reference point information is the same as the priority of the second frequency of the current serving cell, and the signal quality of the current serving cell meets the quality condition, it means that the serving cell in which the terminal is currently located meets the communication conditions. Since there is also a certain distance between the terminal and the reference point, it is necessary to consider the distance between the terminal and the reference point in determining whether to perform the neighboring cell measurement on the first frequency associated with the reference point information. When the distance between the terminal and the position indicated by the reference point information is greater than the distance threshold, the neighboring cell measurement is not performed on the first frequency associated with the reference point information.

If the distance between the terminal and the position indicated by the reference point information is greater than the distance threshold, it means that the terminal is outside the coverage of the neighboring cell indicated by the reference point information. Even if the priority of the first frequency associated with the reference point information is the same as the priority of the second frequency of the current serving cell, and the signal quality of the current serving cell meets the quality condition, but the terminal is outside the coverage of the neighboring cell indicated by the reference point information, so the terminal does not perform the neighboring cell measurement on the first frequency associated with the reference point information.

(2) In a case that the reselection priority of the first frequency associated with the distance threshold corresponding to the reference point information is the same as a priority of a second frequency of a current serving cell, a signal quality of the current serving cell meets a quality condition, and a distance between the terminal and a position corresponding to the reference point information is greater than the distance threshold corresponding to the reference point information, the neighboring cell measurement is not performed on the first frequency.

The quality condition is used for indicating the signal quality requirement of the serving cell. The signal quality of the serving cell meeting the quality condition indicates that the terminal can communicate via the serving cell.

In some embodiments, the quality condition is that a cell selection electrical level of the serving cell is greater than a preset electrical level, and a cell selection quality of the serving cell is greater than a preset quality.

The preset electrical level and the preset quality are determined by a protocol or preconfigured by a network device, and are not limited in the embodiments of the present application.

In an embodiment of the present application, the first frequency associated with the distance threshold corresponding to the reference point information has a priority, and the second frequency of the serving cell in which the terminal is currently located also has a priority. If the reselection priority of the first frequency associated with the distance threshold corresponding to the reference point information is the same as the priority of the second frequency of the current serving cell, and the signal quality of the current serving cell meets the quality condition, it means that the serving cell in which the terminal is currently located meets the communication conditions. Since there is also a certain distance between the terminal and the reference point, it is necessary to consider the distance between the terminal and the reference point in determining whether to perform the neighboring cell measurement on the first frequency associated with the distance threshold corresponding to the reference point information. When the distance between the terminal and the position indicated by the reference point information is greater than the distance threshold, the neighboring cell measurement is not performed on the first frequency associated with the distance threshold corresponding to the reference point information.

If the distance between the terminal and the position indicated by the reference point information is greater than the distance threshold, it means that the terminal is outside the coverage of the neighboring cell indicated by the reference point information. Even if the priority of the first frequency associated with the distance threshold corresponding to the reference point information is the same as the priority of the second frequency of the current serving cell, and the signal quality of the current serving cell meets the quality condition, but the terminal is outside the coverage of the neighboring cell indicated by the reference point information, so the terminal does not perform the neighboring cell measurement on the first frequency associated with the distance threshold corresponding to the reference point information.

(3) In a case that the reselection priority of the first frequency associated with the reference point information and the distance threshold corresponding to the reference point information is the same as a priority of a second frequency of a current serving cell, a signal quality of the current serving cell meets a quality condition, and a distance between the terminal and a position corresponding to the reference point information is greater than the distance threshold corresponding to the reference point information, the neighboring cell measurement is not performed on the first frequency.

The quality condition is used for indicating the signal quality requirement of the serving cell. The signal quality of the serving cell meeting the quality condition indicates that the terminal can communicate via the serving cell.

In some embodiments, the quality condition is that a cell selection electrical level of the serving cell is greater than a preset electrical level, and a cell selection quality of the serving cell is greater than a preset quality.

The preset electrical level and the preset quality are determined by a protocol or preconfigured by a network device, and are not limited in the embodiments of the present application.

In an embodiment of the present application, the first frequency associated with the reference point information and the distance threshold corresponding to the reference point information has a priority, and the second frequency of the serving cell in which the terminal is currently located also has a priority. If the reselection priority of the first frequency associated with the reference point information and the distance threshold corresponding to the reference point information is the same as the priority of the second frequency of the current serving cell, and the signal quality of the current serving cell meets the quality condition, it means that the serving cell in which the terminal is currently located meets the communication condition. Since there is also a certain distance between the terminal and the reference point, it is necessary to consider the distance between the terminal and the reference point in determining whether to perform the neighboring cell measurement on the first frequency associated with the reference point information and the distance threshold corresponding to the reference point information. When the distance between the terminal and the position indicated by the reference point information is greater than the distance threshold, the neighboring cell measurement is not performed on the first frequency associated with the reference point information and the distance threshold corresponding to the reference point information.

If the distance between the terminal and the position indicated by the reference point information is greater than the distance threshold, it means that the terminal is outside the coverage of the neighboring cell indicated by the reference point information. Even if the priority of the first frequency associated with the reference point information and the distance threshold corresponding to the reference point information is the same as the priority of the second frequency of the current serving cell, and the signal quality of the current serving cell meets the quality condition, but the terminal is outside the coverage of the neighboring cell indicated by the reference point information, so the terminal does not perform the neighboring cell measurement on the first frequency associated with the reference point information and the distance threshold corresponding to the reference point information.

In the solution provided by this embodiment of the present application, in a case that the terminal determines that the reselection priority of the first frequency is the same as the priority of the second frequency of the serving cell, and the signal quality of the serving cell meets the quality condition, if the distance between the terminal and the position indicated by the reference point information associated with the first frequency is greater than the distance threshold, the terminal will not perform the neighboring cell measurement on the first frequency, thereby improving the accuracy of the terminal in performing neighboring cell measurement.

The present application also provides a neighboring cell measurement method, in which a terminal performs neighboring cell measurement based on at least one piece of reference point information and at least one distance threshold corresponding to the at least one piece of reference point information. One frequency is associated with multiple pieces of reference point information, and the terminal still determines whether to perform the neighboring cell measurement on the frequency associated with the multiple pieces of reference point information based on the priority of the frequency, the signal quality of the serving cell, and the distance between the terminal and the position indicated by the reference point information.

If a frequency is associated with multiple pieces of reference point information, that is, the frequencies associated with the multiple pieces of reference point information are the same, and each piece of reference point information indicates at least one neighboring cell, it means that the frequencies of the neighboring cells indicated by the multiple pieces of reference point information are the same.

In some embodiments, in a case that a first frequency is associated with multiple pieces of reference point information and/or the distance thresholds corresponding to the multiple pieces of reference point information, the reselection priority of the first frequency is the same as the priority of the second frequency of the current serving cell, the signal quality of the current serving cell meets the quality condition, and the distance between the position corresponding to at least one piece of reference point information in the multiple pieces of reference point information and the terminal is less than or equal to the distance threshold corresponding to the at least one piece of reference point information in the multiple pieces of reference point information, the terminal performs the neighboring cell measurement on the first frequency.

The terminal performs the neighboring cell measurement on the first frequency associated with the reference point information in the following three situations.

(1) In a case that a first frequency is associated with multiple pieces of reference point information, the reselection priority of the first frequency is the same as a priority of a second frequency of a current serving cell, a signal quality of the current serving cell meets a quality condition, and the distance between the position corresponding to at least one piece of reference point information in the multiple pieces of reference point information and the terminal is less than or equal to a distance threshold corresponding to the at least one piece of reference point information in the multiple pieces of reference point information, the neighboring cell measurement is performed on the first frequency.

The quality condition is used for indicating the signal quality requirement of the serving cell. The signal quality of the serving cell meeting the quality condition indicates that the terminal can communicate via the serving cell.

In some embodiments, the quality condition is that a cell selection electrical level of the serving cell is greater than a preset electrical level, and a cell selection quality of the serving cell is greater than a preset quality.

The preset electrical level and the preset quality are determined by a protocol or preconfigured by a network device, and are not limited in the embodiments of the present application.

In an embodiment of the present application, the first frequency associated with multiple pieces of reference point information has a priority, and the second frequency of the serving cell in which the terminal is currently located also has a priority. If the reselection priority of the first frequency associated with the multiple pieces of reference point information is the same as the priority of the second frequency of the current serving cell, and the signal quality of the current serving cell meets the quality condition, and since there are also certain distances between the terminal and the reference points, it is necessary to consider the distances between the terminal and the reference points in determining whether to perform the neighboring cell measurement on the first frequency. Therefore, if the distance between the position corresponding to at least one piece of reference point information in the multiple pieces of reference point information and the terminal is less than or equal to a configured distance threshold corresponding to the at least one piece of reference point information in the multiple pieces of reference point information, the neighboring cell measurement is performed on the first frequency.

If the distance between the terminal and the position indicated by the at least one piece of reference point information in the multiple pieces of reference point information is less than or equal to the distance threshold, it means that the terminal is located in the coverage range of the neighboring cell indicated by the at least one piece of reference point information. Even if the priority of the first frequency is the same as the priority of the second frequency of the serving cell, and the signal quality of the current serving cell meets the quality condition, but the terminal is still located in the coverage range of the neighboring cell indicated by the at least one piece of reference point information in multiple pieces of reference point information, if the neighboring cell indicated by the at least one piece of reference point information is a TN network, the terminal may preferentially camp on the TN network, so the terminal can perform the neighboring cell measurement on the first frequency.

For example, reference point information 1, reference point information 2 and reference point information 3 are all associated with a frequency 1, and the distance thresholds corresponding to reference point information 1, reference point information 2 and reference point information 3 are all 50 meters, while the distance between the terminal and the position indicated by reference point information 1 is 40 meters, the distance between the terminal and the position indicated by reference point information 2 is 70 meters, and the distance between the terminal and the position indicated by reference point information 3 is 60 meters. It can be determined that the distance between the position indicated by the reference point information 1 among reference point information 1, reference point information 2 and reference point information 3 and the terminal is less than 50 meters, so the terminal can perform the neighboring cell measurement on the frequency 1.

(2) In a case that a first frequency is associated with the distance thresholds corresponding to multiple pieces of reference point information, the reselection priority of the first frequency is the same as a priority of a second frequency of a current serving cell, a signal quality of the current serving cell meets a quality condition, and the distance between the position corresponding to at least one piece of reference point information in the multiple pieces of reference point information and the terminal is less than or equal to a distance threshold corresponding to the at least one piece of reference point information in the multiple pieces of reference point information, the neighboring cell measurement is performed on the first frequency.

The quality condition is used for indicating the signal quality requirement of the serving cell. The signal quality of the serving cell meeting the quality condition indicates that the terminal can communicate via the serving cell.

In some embodiments, the quality condition is that a cell selection electrical level of the serving cell is greater than a preset electrical level, and a cell selection quality of the serving cell is greater than a preset quality.

The preset electrical level and the preset quality are determined by a protocol or preconfigured by a network device, and are not limited in the embodiments of the present application.

In an embodiment of the present application, the first frequency associated with the distance thresholds corresponding to multiple pieces of reference point information has a priority, and the second frequency of the serving cell in which the terminal is currently located also has a priority. If the reselection priority of the first frequency associated with the distance thresholds corresponding to the multiple pieces of reference point information is the same as the priority of the second frequency of the current serving cell, and the signal quality of the current serving cell meets the quality condition, and since there are also certain distances between the terminal and the reference points, it is necessary to consider the distances between the terminal and the reference points in determining whether to perform the neighboring cell measurement on the first frequency. Therefore, if the distance between the position corresponding to at least one piece of reference point information in the multiple pieces of reference point information and the terminal is less than or equal to a configured distance threshold corresponding to the at least one piece of reference point information in the multiple pieces of reference point information, the neighboring cell measurement is performed on the first frequency.

If the distance between the terminal and the position indicated by the at least one piece of reference point information in the multiple pieces of reference point information is less than or equal to the distance threshold, it means that the terminal is located in the coverage range of the neighboring cell indicated by the at least one piece of reference point information in the multiple pieces of reference point information. Even if the priority of the first frequency is the same as the priority of the second frequency of the serving cell, and the signal quality of the current serving cell meets the quality condition, but the terminal is still located in the coverage range of the neighboring cell indicated by at least one piece of reference point information in multiple pieces of reference point information. If the neighboring cell indicated by the at least one piece of reference point information in the multiple pieces of reference point information is a TN network, the terminal may preferentially camp on the TN network, so the terminal can perform the neighboring cell measurement on the first frequency.

(3) In a case that a first frequency is associated with multiple pieces of reference point information and distance thresholds corresponding to the multiple pieces of reference point information, the reselection priority of the first frequency is the same as a priority of a second frequency of a current serving cell, the signal quality of the current serving cell satisfies the quality condition, and the distance between a position corresponding to at least one piece of reference point information in the multiple pieces of reference point information and the terminal is less than or equal to a distance threshold corresponding to the at least one piece of reference point information in the multiple pieces of reference point information, the neighboring cell measurement is performed on the first frequency.

The quality condition is used for indicating the signal quality requirement of the serving cell. The signal quality of the serving cell meeting the quality condition indicates that the terminal can communicate via the serving cell.

In some embodiments, the quality condition is that a cell selection electrical level of the serving cell is greater than a preset electrical level, and a cell selection quality of the serving cell is greater than a preset quality.

The preset electrical level and the preset quality are determined by a protocol or preconfigured by a network device, and are not limited in the embodiments of the present application.

In an embodiment of the present application, the first frequency associated with multiple pieces of reference point information and the distance thresholds corresponding to the multiple pieces of reference point information has a priority, and the second frequency of the serving cell in which the terminal is currently located also has a priority. If the reselection priority of the first frequency associated with the multiple pieces of reference point information and the distance thresholds corresponding to the multiple pieces of reference point information is the same as the priority of the second frequency of the current serving cell, and the signal quality of the current serving cell meets the quality condition, and since there are also certain distances between the terminal and the reference points, it is necessary to consider the distances between the terminal and the reference points in determining whether to perform the neighboring cell measurement on the first frequency. Therefore, if the distance between the position corresponding to at least one piece of reference point information in the multiple pieces of reference point information and the terminal is less than or equal to a configured distance threshold corresponding to the at least one piece of reference point information in the multiple pieces of reference point information, the neighboring cell measurement is performed on the first frequency.

If the distance between the terminal and the position indicated by the at least one piece of reference point information in the multiple pieces of reference point information is less than or equal to the distance threshold, it means that the terminal is located in the coverage range of the neighboring cell indicated by the at least one piece of reference point information in the multiple pieces of reference point information. Even if the priority of the first frequency is the same as the priority of the second frequency of the serving cell, and the signal quality of the current serving cell meets the quality condition, the terminal is still located in the coverage range of the neighboring cell indicated by the at least one piece of reference point information in multiple pieces of reference point information. If the neighboring cell indicated by the at least one piece of reference point information in the multiple pieces of reference point information is a TN network, the terminal may preferentially camp on the TN network, so the terminal can perform the neighboring cell measurement on the first frequency.

The embodiments of the present application provide a method for measuring neighboring cells, which ensures the measurement of neighboring cells, and the cell measurement is performed based on reference point information and the distance threshold corresponding to the reference point information, thereby improving the accuracy of cell measurement. In addition, when the terminal determines that a reselection priority of the first frequency is the same as the priority of the second frequency of the serving cell, and the signal quality of the serving cell meets the quality condition, if the distance between the terminal and the position indicated by the reference point information associated with the first frequency is less than or equal to the distance threshold, the terminal will still perform the neighboring cell measurement on the first frequency, thereby improving the efficiency of the terminal in performing a neighboring cell measurement and reselecting the neighboring cell.

It should be noted that this embodiment of the present application is described by taking the terminal performing the neighboring cell measurement on the first frequency associated with the reference point as an example, while in other embodiments, there are situations where the terminal does not perform the neighboring cell measurement on the first frequency.

Optionally, in a case that the first frequency is associated with multiple pieces of reference point information and/or the distance thresholds corresponding to multiple reference point information, the reselection priority of the first frequency is the same as the priority of the second frequency of the current serving cell, the signal quality of the current serving cell meets the quality condition, and a distance between a position corresponding to each piece of reference point information in the multiple pieces of reference point information and the terminal is greater than a distance threshold corresponding to the each piece of reference point information in the multiple pieces of reference point information, the neighboring cell measurement is not performed on the first frequency.

The terminal does not perform the neighboring cell measurement on the first frequency associated with the reference point information in the following three situations.

(1) In a case that a first frequency is associated with multiple pieces of reference point information, the reselection priority of the first frequency is the same as a priority of a second frequency of a current serving cell, a signal quality of the current serving cell meets a quality condition, and a distance between a position corresponding to each piece of reference point information in the multiple pieces of reference point information and the terminal is greater than a distance threshold corresponding to the each piece of reference point information in the multiple pieces of reference point information, the neighboring cell measurement is not performed on the first frequency.

The quality condition is used for indicating the signal quality requirement of the serving cell. The signal quality of the serving cell meeting the quality condition indicates that the terminal can communicate via the serving cell.

In some embodiments, the quality condition is that a cell selection electrical level of the serving cell is greater than a preset electrical level, and a cell selection quality of the serving cell is greater than a preset quality.

The preset electrical level and the preset quality are determined by a protocol or preconfigured by a network device, and are not limited in the embodiments of the present application.

In an embodiment of the present application, the first frequency associated with multiple pieces of reference point information has a priority, and the second frequency of the serving cell in which the terminal is currently located also has a priority. If the reselection priority of the first frequency associated with the multiple pieces of reference point information is the same as the priority of the second frequency of the current serving cell, and the signal quality of the current serving cell meets the quality condition, and since there are also certain distances between the terminal and the reference points, it is necessary to consider the distances between the terminal and the reference points in determining whether to perform the neighboring cell measurement on the first frequency. Therefore, if a distance between a position corresponding to each piece of reference point information in the multiple pieces of reference point information and the terminal is greater than a configured distance threshold corresponding to the each piece of reference point information in the multiple pieces of reference point information, the neighboring cell measurement is not performed on the first frequency.

If the distance between the terminal and the position indicated by the each piece of reference point information in the multiple pieces of reference point information is greater than the distance threshold, it means that the terminal is outside the coverage of the neighboring cell indicated by the each piece of reference point information in the multiple pieces of reference point information. Since the priority of the first frequency is the same as the priority of the second frequency of the serving cell, the signal quality of the current serving cell meets the quality condition, and the terminal is also outside the coverage of the neighboring cell indicated by the each piece of reference point information in multiple pieces of reference point information, the terminal may not perform the neighboring cell measurement on the first frequency.

For example, reference point information 1, reference point information 2 and reference point information 3 are all associated with a frequency 1, and the distance thresholds corresponding to reference point information 1, reference point information 2 and reference point information 3 are all 50 meters, while the distance between the terminal and the position indicated by reference point information 1 is 55 meters, the distance between the terminal and the position indicated by reference point information 2 is 70 meters, and the distance between the terminal and the position indicated by reference point information 3 is 60 meters. It can be determined that the distances between the positions indicated by reference point information 1, reference point information 2 and reference point information 3 and the terminal are all greater than 50 meters, so the terminal may not perform the neighboring cell measurement on the frequency 1.

(2) In a case that a first frequency is associated with the distance thresholds corresponding to multiple pieces of reference point information, the reselection priority of the first frequency is the same as a priority of a second frequency of a current serving cell, a signal quality of the current serving cell meets a quality condition, and a distance between a position corresponding to each piece of reference point information in the multiple pieces of reference point information and the terminal is greater than a distance threshold corresponding to the each piece of reference point information in the multiple pieces of reference point information, the neighboring cell measurement is not performed on the first frequency.

The quality condition is used for indicating the signal quality requirement of the serving cell. The signal quality of the serving cell meeting the quality condition indicates that the terminal can communicate via the serving cell.

In some embodiments, the quality condition is that a cell selection electrical level of the serving cell is greater than a preset electrical level, and a cell selection quality of the serving cell is greater than a preset quality.

The preset electrical level and the preset quality are determined by a protocol or preconfigured by a network device, and are not limited in the embodiments of the present application.

In an embodiment of the present application, the first frequency associated with the distance thresholds corresponding to multiple pieces of reference point information has a priority, and the second frequency of the serving cell in which the terminal is currently located also has a priority. If the reselection priority of the first frequency associated with the distance thresholds corresponding to the multiple pieces of reference point information is the same as the priority of the second frequency of the current serving cell, and the signal quality of the current serving cell meets the quality condition, and since there are also certain distances between the terminal and the reference points, it is necessary to consider the distances between the terminal and the reference points in determining whether to perform the neighboring cell measurement on the first frequency. Therefore, if a distance between a position corresponding to each piece of reference point information in the multiple pieces of reference point information and the terminal is greater than a configured distance threshold corresponding to the each piece of reference point information in the multiple pieces of reference point information, the neighboring cell measurement is not performed on the first frequency.

If the distance between the terminal and the position indicated by the each piece of reference point information in the multiple pieces of reference point information is greater than the distance threshold, it means that the terminal is outside the coverage of the neighboring cell indicated by the each piece of reference point information in the multiple pieces of reference point information. Since the priority of the first frequency is the same as the priority of the second frequency of the serving cell, the signal quality of the current serving cell meets the quality condition, and the terminal is also outside the coverage of the neighboring cell indicated by the each piece of reference point information in multiple pieces of reference point information, the terminal may not perform the neighboring cell measurement on the first frequency.

(3) In a case that a first frequency is associated with multiple pieces of reference point information and distance thresholds corresponding to the multiple pieces of reference point information, the reselection priority of the first frequency is the same as a priority of a second frequency of a current serving cell, a signal quality of the current serving cell meets a quality condition, and a distance between a position corresponding to each piece of reference point information in the multiple pieces of reference point information and the terminal is greater than a distance threshold corresponding to the each piece of reference point information in the multiple pieces of reference point information, the neighboring cell measurement is not performed on the first frequency.

The quality condition is used for indicating the signal quality requirement of the serving cell. The signal quality of the serving cell meeting the quality condition indicates that the terminal can communicate via the serving cell.

In some embodiments, the quality condition is that a cell selection electrical level of the serving cell is greater than a preset electrical level, and a cell selection quality of the serving cell is greater than a preset quality.

The preset electrical level and the preset quality are determined by a protocol or preconfigured by a network device, and are not limited in the embodiments of the present application.

In an embodiment of the present application, the first frequency associated with multiple pieces of reference point information and the distance thresholds corresponding to the multiple pieces of reference point information has a priority, and the second frequency of the serving cell in which the terminal is currently located also has a priority. If the reselection priority of the first frequency associated with the multiple pieces of reference point information and the distance thresholds corresponding to the multiple pieces of reference point information is the same as the priority of the second frequency of the current serving cell, and the signal quality of the current serving cell meets the quality condition, and since there are also certain distances between the terminal and the reference points, it is necessary to consider the distances between the terminal and the reference points in determining whether to perform the neighboring cell measurement on the first frequency. Therefore, if a distance between a position corresponding to each piece of reference point information in the multiple pieces of reference point information and the terminal is greater than a configured distance threshold corresponding to the each piece of reference point information in the multiple pieces of reference point information, the neighboring cell measurement is not performed on the first frequency.

If the distance between the terminal and the position indicated by the each piece of reference point information in the multiple pieces of reference point information is greater than the distance threshold, it means that the terminal is outside the coverage of the neighboring cell indicated by the each piece of reference point information in the multiple pieces of reference point information. Since the priority of the first frequency is the same as the priority of the second frequency of the serving cell, the signal quality of the current serving cell meets the quality condition, and the terminal is also outside the coverage of the neighboring cell indicated by the each piece of reference point information in multiple pieces of reference point information, the terminal may not perform the neighboring cell measurement on the first frequency.

In the solution provided by the embodiments of the present application, in a case that the terminal determines that the reselection priority of the first frequency is the same as the priority of the second frequency of the serving cell, and the signal quality of the serving cell meets the quality condition, if the distance between the terminal and the position indicated by the reference point information associated with the first frequency is greater than the distance threshold, the terminal will not perform the neighboring cell measurement on the first frequency, thereby improving the accuracy of the terminal in performing the neighboring cell measurement.

It should be noted that the quality condition in the above embodiments are:

$$\mathrm{Srxlev} = \mathrm{Q_{rxlevmeas}} - (\mathrm{Q_{rxlevmin}} + \mathrm{Q_{rxlevminoffset}}) - \mathrm{P_{compensation}} - \mathrm{Qoffset_{temp}}$$

$$\mathrm{Squal} = \mathrm{Q_{qualmeas}} - (\mathrm{Q_{qualmin}} + \mathrm{Q_{qualminoffset}}) - \mathrm{Qoffset_{temp.}}$$

Srxlev is the cell selection electrical level, Squal is the cell selection quality. $\mathrm{Qoffset_{temp}}$ is a cell offset. $\mathrm{Q_{rxlevmeas}}$ is Reference Signal Received Power (RSRP). $\mathrm{Q_{qualmeas}}$ is Reference Signal Received Quality (RSRQ). $\mathrm{Q_{rxlevmin}}$ is the minimum level required by the cell. $\mathrm{Q_{qualmin}}$ is the minimum quality level required by the cell. $\mathrm{Q_{rxlevminoffset}}$ is the signal offset in the Srxlev evaluation. $\mathrm{Q_{qualminoffset}}$ is the signal offset in the Squal evaluation. $\mathrm{P_{compensation}}$ is a compensation level. As far as the value of $\mathrm{P_{compensation}}$ is concerned, for Frequency Range 1 (FR1), if the terminal supports the additional Pmax in NR-NS-PmaxList, if Pmax exists, then obtain, from System Information Block 1 (SIB1), System Information Block 2 (SIB2) and System Information Block 4 (SIB4), the first maximum value in a difference between PEMAX1 and PPowerClass and 0, PPowerClass being the power class level, the first minimum value in PEMAX2 and PPowerClass, and the second minimum value in PEMAX1 and PPowerClass, and then obtain a first difference between the first minimum value and the second minimum value, and determine the difference between the first maximum value and the first difference as $P_{compensation}$; if Pmax does not exist, determine a maximum value in PEMAX1-PPowerClass and 0 as $P_{compensation}$. For Frequency Range 2 (FR2), $P_{compensation}$ is set to 0. PEMAX is the maximum power level that the terminal can use in uplink transmission. If the terminal supports the Supplementary Uplink (SUL) frequency of the cell, PEMAX1 and PEMAX2 are obtained separately from the p-Max of SUL and NR-NS-PmaxList (a maximum power level list) of SUL in SIB1, SIB2 and SIB4. If the terminal does not support the SUL frequency of the cell, PEMAX1 and PEMAX2 are obtained separately from the p-Max and NR-NS-PmaxList in SIB1, SIB2 and SIB4 of the normal Uplink (UL).

It should be noted that the above-mentioned embodiments can be split into new embodiments, or combined with other embodiments to form new embodiments. This disclosure does not limit the combination between the embodiments.

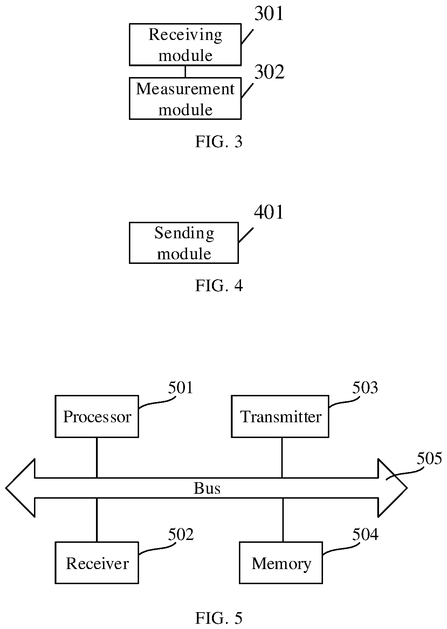

FIG. 3 shows a block diagram of a neighboring cell measurement apparatus according to an exemplary embodiment of the present application. Referring to FIG. 3, the apparatus includes:

a receiving module 301, configured to receive configuration information sent by a network device, where the configuration information includes at least one piece of reference point information and a distance threshold corresponding to every one of the at least one piece of reference point information, and the at least one piece of reference point information and/or the distance threshold corresponding to the every piece of reference point information is associated with at least one frequency; and

a measurement module 302, configured to perform a neighboring cell measurement based on the at least one piece of reference point information and the distance threshold corresponding to the every piece of reference point information.

In some embodiments, the at least one piece of reference point information indicates a position of a neighboring cell.

In some embodiments, the configuration information is a system message, or the configuration information is a radio resource control (RRC) release message.

In some embodiments, the measurement module 302 is further configured to:
in a case that a reselection priority of a first frequency corresponding to the reference point information and/or the distance threshold corresponding to the reference point information is higher than a priority of a second frequency of a current serving cell, and a distance between the terminal and the position indicated by the reference point information is less than or equal to the distance threshold, perform the neighboring cell measurement on the first frequency.

In some embodiments, the measurement module 302 is further configured to:
in a case that the reselection priority of the first frequency corresponding to the reference point information and/or the distance threshold corresponding to the reference point information is higher than a priority of a second frequency of a current serving cell, and the distance between the terminal and the position indicated by the reference point information is greater than the distance threshold, not perform the neighboring cell measurement on the first frequency.

In some embodiments, the measurement module 302 is further configured to:
in a case that the first frequency is associated with multiple pieces of reference point information and/or the distance thresholds corresponding to multiple pieces of reference point information, the reselection priority of the first frequency is higher than the priority of the second frequency of the current serving cell, and a distance between a position corresponding to at least one piece of reference point information in the multiple pieces of reference point information and the terminal is less than or equal to a distance threshold corresponding to the at least one piece of reference point information in the multiple pieces of reference point information, perform the neighboring cell measurement on the first frequency.

In some embodiments, the measurement module 302 is further configured to:
in a case that the first frequency is associated with multiple pieces of reference point information and/or the distance thresholds corresponding to multiple pieces of reference point information, the reselection priority of the first frequency is higher than the priority of the second frequency of the current serving cell, and a distance between a position corresponding to each piece of reference point information in the multiple pieces of reference point information and the terminal is greater than a distance threshold corresponding to the each piece of reference point information in the multiple pieces of reference point information, not perform the neighboring cell measurement on the first frequency.

In some embodiments, the measurement module 302 is further configured to:
in a case that the reselection priority of the first frequency corresponding to the reference point information and/or the distance threshold corresponding to the reference point information is the same as the priority of the second frequency of the current serving cell, the signal quality of the current serving cell meets the quality condition, and a distance between the terminal and a position corresponding to the reference point information is less than or equal to the distance threshold corresponding to the reference point information, perform the neighboring cell measurement on the first frequency.

In some embodiments, the measurement module 302 is further configured to:

in a case that the reselection priority of the first frequency corresponding to the reference point information and/or the distance threshold corresponding to the reference point information is the same as the priority of the second frequency of the current serving cell, the signal quality of the current serving cell meets the quality condition, and a distance between the terminal and a position corresponding to the reference point information is greater than the distance threshold corresponding to the reference point information, not perform the neighboring cell measurement on the first frequency.

In some embodiments, the measurement module 302 is further configured to:

in a case that the first frequency is associated with multiple pieces of reference point information and/or the distance thresholds corresponding to multiple pieces of reference point information, the reselection priority of the first frequency is the same as the priority of the second frequency of the current serving cell, the signal quality of the current serving cell meets the quality condition, and a distance between the position corresponding to at least one piece of reference point information in the multiple pieces of reference point information and the terminal is less than or equal to a distance threshold corresponding to the at least one piece of reference point information in the multiple pieces of reference point information, perform the neighboring cell measurement on the first frequency.

In some embodiments, the measurement module 302 is further configured to:

in a case that the first frequency is associated with multiple pieces of reference point information and/or the distance thresholds corresponding to multiple pieces of reference point information, the reselection priority of the first frequency is the same as the priority of the second frequency of the current serving cell, the signal quality of the current serving cell meets the quality condition, and a distance between a position corresponding to each piece of reference point information in the multiple pieces of reference point information and the terminal is greater than a distance threshold corresponding to the each piece of reference point information in the multiple pieces of reference point information, not perform the neighboring cell measurement on the first frequency.

In some embodiments, the quality condition is that a cell selection electrical level of the serving cell is greater than a preset electrical level, and a cell selection quality of the serving cell is greater than a preset quality.

In some embodiments, the network device belongs to a non-terrestrial network (NTN).

In some embodiments, at least one piece of reference point information and a distance threshold corresponding to every one of the at least one piece of reference point information belong to a terrestrial network (TN).

It should be noted that the apparatus provided in the above embodiment is merely illustrated exemplarily with a division into various functional modules. In actual applications, the above functions can be assigned to different functional modules as needed, that is, the internal structure of the apparatus is divided into different functional modules to complete all or part of the functions described above. In addition, the apparatus provided in the above embodiment and the embodiments of the positioning signal transmission methods belong to the same concept. For the specific implementation process of the apparatus, references may be made to the method embodiments, and detailed descriptions thereof are omitted herein.

FIG. 4 shows a block diagram of another neighboring cell measurement apparatus according to an exemplary embodiment of the present application. Referring to FIG. 4, the apparatus includes:

a sending module 401, configured to send configuration information to a terminal, in which the configuration information includes at least one piece of reference point information and a distance threshold corresponding to every one of the at least one piece of reference point information, and the at least one piece of reference point information and/or the distance threshold corresponding to the every piece of reference point information is associated with at least one frequency;

the at least one piece of reference point information and the distance threshold corresponding to the every piece of reference point information are used by the terminal to perform a neighboring cell measurement.

In some embodiments, the at least one piece of reference point information indicates a position of a neighboring cell.

In some embodiments, the configuration information is a system message, or the configuration information is an RRC release message.

In some embodiments, the network device belongs to an NTN.

In some embodiments, at least one piece of reference point information and a distance threshold corresponding to every one of the at least one piece of reference point information belong to a TN.

It should be noted that the apparatus provided in the above embodiment is merely illustrated exemplarily with a division into various functional modules. In actual applications, the above functions can be assigned to different functional modules as needed, that is, the internal structure of the apparatus is divided into different functional modules to complete all or part of the functions described above. In addition, the apparatus provided in the above embodiment and the embodiments of the positioning signal transmission methods belong to the same concept. For the specific implementation process of the apparatus, references may be made to the method embodiments, and detailed descriptions thereof are omitted herein.

FIG. 5 shows a schematic structural diagram of a communication device according to an exemplary embodiment of the present application. The communication device includes: a processor 501, a receiver 502, a transmitter 503, a memory 504 and a bus 505.

The processor 501 includes one or more processing cores. The processor 501 executes various functional applications and information processing by running software programs and modules.

The receiver 502 and the transmitter 503 may be implemented as one communication component, which may be one communication chip.

The memory 504 is connected to the processor 501 via a bus 505.

The memory 504 may be used for storing at least one program code, and the processor 501 is used for executing the at least one program code to implement each step in the above method embodiments.

In addition, the communication device may be a terminal or a network device. The memory 1004 may be implemented by any type of volatile or non-volatile storage device or a combination thereof, and the volatile or non-volatile storage device includes but is not limited to: magnetic disk or optical disc, electrically erasable programmable read-only memory (EEPROM), erasable programmable read-only memory (EPROM), static random access memory (SRAM), read-only memory (ROM), magnetic storage, flash memory, and programmable read-only memory (PROM).

In an exemplary embodiment, a computer-readable storage medium is further provided, in which executable program code is stored. The executable program code, when being loaded and executed by a processor, implements the neighbor cell measurement method performed by a communication device according to the above-mentioned method embodiments.

In an exemplary embodiment, a chip is provided. The chip includes a programmable logic circuit and/or program instructions. When the chip is running in a terminal or a network device, the chip implements the neighbor cell measurement method according to the above-mentioned method embodiments.

In an exemplary embodiment, a computer program product is provided. When the computer program product is executed by a processor of a terminal or a network device, the neighbor cell measurement method according to the above-mentioned method embodiments is implemented.

A person skilled in the art will understand that all or part of the steps for implementing the above embodiments may be accomplished by hardware, or by a program instructing related hardware, and the program may be stored in a computer-readable storage medium, and the above-mentioned storage medium may be a read-only memory, a magnetic disk or an optical disc, etc.

The above description merely provides optional embodiments of the present application and is not intended to limit the present application. Any modifications, equivalent substitutions, improvements, etc. made within the spirit and principles of the present application shall be included in the scope of the present application.

**Claims**

1. A neighboring cell measurement method, performed by a terminal, and comprising:

   receiving configuration information sent by a network device, wherein the configuration information comprises at least one piece of reference point information and a distance threshold corresponding to every one of the at least one piece of reference point information, and every piece of reference point information and/or the distance threshold corresponding to the every piece of reference point information is associated with at least one frequency; and
   performing a neighboring cell measurement based on the at least one piece of reference point information and the distance threshold corresponding to the every piece of reference point information.

2. The method according to claim 1, wherein the at least one piece of reference point information indicates a position of a neighboring cell.

3. The method according to claim 1 or 2, wherein the configuration information is a system message, or a radio resource control RRC release message.

4. The method according to any one of claims 1 to 3, wherein performing the neighboring cell measurement based on the at least one piece of reference point information and the at least one distance threshold corresponding to the at least one piece of reference point information comprises:
   in a case that a reselection priority of a first frequency associated with reference point information and/or a distance threshold corresponding to the reference point information is higher than a priority of a second frequency of a current serving cell, and a distance between the terminal and a position indicated by the reference point information is less than or equal to the distance threshold, performing the neighboring cell measurement on the first frequency.

5. The method according to any one of claims 1 to 3, further comprising:
in a case that a reselection priority of a first frequency associated with reference point information and/or a distance threshold corresponding to the reference point information is higher than a priority of a second frequency of a current serving cell, and a distance between the terminal and a position indicated by the reference point information is greater than the distance threshold, not performing the neighboring cell measurement on the first frequency.

6. The method according to any one of claims 1 to 3, wherein performing the neighboring cell measurement based on the at least one piece of reference point information and the at least one distance threshold corresponding to the at least one piece of reference point information comprises:
in a case that a first frequency is associated with multiple pieces of reference point information and/or distance thresholds corresponding to the multiple pieces of reference point information, a reselection priority of the first frequency is higher than a priority of a second frequency of a current serving cell, and a distance between a position corresponding to at least one piece of reference point information in the multiple pieces of reference point information and the terminal is less than or equal to a distance threshold corresponding to the at least one piece of reference point information in the multiple pieces of reference point information, performing the neighboring cell measurement on the first frequency.

7. The method according to any one of claims 1 to 3, further comprising:
in a case that a first frequency is associated with multiple pieces of reference point information and/or distance thresholds corresponding to the multiple pieces of reference point information, a reselection priority of the first frequency is higher than a priority of a second frequency of a current serving cell, and a distance between a position corresponding to each piece of reference point information in the multiple pieces of reference point information and the terminal is greater than a distance threshold corresponding to the each piece of reference point information in the multiple pieces of reference point information, not performing the neighboring cell measurement on the first frequency.

8. The method according to any one of claims 1 to 3, wherein performing the neighboring cell measurement based on the at least one reference point information and the at least one distance threshold corresponding to the at least one piece of reference point information comprises:
in a case that a reselection priority of a first frequency associated with a reference point information and/or a distance threshold corresponding to the reference point information is the same as a priority of a second frequency of a current serving cell, a signal quality of the current serving cell meets a quality condition, and a distance between the terminal and a position corresponding to the reference point information is less than or equal to the distance threshold corresponding to the reference point information, performing the neighboring cell measurement on the first frequency.

9. The method according to any one of claims 1 to 3, further comprising:
in a case that a reselection priority of a first frequency associated with a reference point information and/or a distance threshold corresponding to the reference point information is the same as a priority of a second frequency of a current serving cell, a signal quality of the current serving cell meets a quality condition, and a distance between the terminal and a position corresponding to the reference point information is greater than the distance threshold corresponding to the reference point information, not performing the neighboring cell measurement on the first frequency.

10. The method according to any one of claims 1 to 3, wherein performing the neighboring cell measurement based on the at least one piece of reference point information and the at least one distance threshold corresponding to the at least one piece of reference point information comprises:
in a case that a first frequency is associated with multiple pieces of reference point information and/or distance thresholds corresponding to the multiple pieces of reference point information, a reselection priority of the first frequency is the same as a priority of a second frequency of a current serving cell, a signal quality of the current serving cell meets a quality condition, and a distance between a position corresponding to at least one piece of reference point information in the multiple pieces of reference point information and the terminal is less than or equal to a distance threshold corresponding to the at least one piece of reference point information in the multiple pieces of reference point information, performing the neighboring cell measurement on the first frequency.

11. The method according to any one of claims 1 to 3, further comprising:
in a case that a first frequency is associated with multiple pieces of reference point information and/or distance thresholds corresponding to the multiple pieces of reference point information, a reselection priority of the first frequency is the same as a priority of a second frequency of a current serving cell, a signal quality of the current serving cell meets a quality condition, and a distance between a position corresponding to each piece of reference point information in the multiple pieces of reference point information and the terminal is greater than a distance threshold corresponding to the each piece of reference point information in the multiple pieces of reference point information, not performing the neighboring cell measurement on the first frequency.

12. The method according to any one of claims 8 to 11, wherein the quality condition is that a cell selection electrical level of the serving cell is greater than a preset electrical level, and a cell selection quality of the serving cell is greater than a preset quality.

13. The method according to any one of claims 1 to 12, wherein the network device belongs to a non-terrestrial network (NTN).

14. The method according to any one of claims 1 to 12, wherein the at least one piece of reference point information and the distance threshold corresponding to the every piece of reference point information belong to a terrestrial network (TN).

15. A neighboring cell measurement method, performed by a network device, and comprising:

sending configuration information to a terminal, wherein the configuration information comprises at least one piece of reference point information and a distance threshold corresponding to every one of the at least one piece of reference point information, and the every piece of reference point information and/or the distance threshold corresponding to the every piece of reference point information is associated with at least one frequency;
the at least one piece of reference point information and the distance threshold corresponding to the every piece of reference point information are used by the terminal to perform a neighboring cell measurement.

16. The method according to claim 15, wherein the at least one piece of reference point information indicates a position of a neighboring cell.

17. The method according to claim 15 or 16, wherein the configuration information is a system message, or a radio resource control RRC release message.

18. The method according to any one of claims 15 to 17, wherein the network device belongs to an NTN.

19. The method according to any one of claims 15 to 17, wherein the at least one piece of reference point information and the distance threshold corresponding to the every piece of reference point information belong to a TN.

20. A neighboring cell measurement apparatus, comprising:

a receiving module, configured to receive configuration information sent by a network device, wherein the configuration information comprises at least one piece of reference point information and a distance threshold corresponding to every one of the at least one piece of reference point information, and the every piece of reference point information and/or the distance threshold corresponding to the every piece of reference point information is associated with at least one frequency; and
a measurement module, configured to perform a neighboring cell measurement based on the at least one piece of reference point information and the distance threshold corresponding to the every piece of reference point information.

21. A neighboring cell measurement apparatus, comprising:

a sending module, configured to send configuration information to a terminal, wherein the configuration information comprises at least one piece of reference point information and a distance threshold corresponding to every one of the at least one piece of reference point information, and the at least one piece of reference point information and/or the distance threshold corresponding to the every piece of reference point information is associated with at least one frequency;
the at least one piece of reference point information and the distance threshold corresponding to the every piece of reference point information are used by the terminal to perform a neighboring cell measurement.

22. A terminal, comprising:

    a processor; and
    a transceiver connected to the processor;
    wherein the processor is configured to load and execute executable instructions to implement the neighboring cell measurement method according to any one of claims 1 to 14.

23. A network device, comprising:

    a processor; and
    a transceiver connected to the processor;
    wherein the processor is configured to load and execute executable instructions to implement the neighboring cell measurement method according to any one of claims 15 to 19.

24. A computer-readable storage medium having an executable program code stored therein, wherein the executable program code, when being loaded and executed by a processor, implements the neighbor cell measurement method according to any one of claims 1 to 19.

Network
device 20

Terminal 10

Network
device 20

FIG. 1

Terminal

Network
device

Step 201: A network device sends
configuration information to a terminal,
wherein the configuration information includes
at least one piece of reference point
information and a distance threshold
corresponding to every of the at least one piece
of reference point information, and the at least
one piece of reference point information and/or
the distance threshold corresponding to every
piece of reference point information is
associated with at least one frequency

Step 202: The terminal receives the configuration
information sent by the network device, wherein the
configuration information includes at least one piece of
reference point information and a distance threshold
corresponding to every of the at least one piece of
reference point information, and the at least one piece of
reference point information and/or the distance threshold
corresponding to the every piece of reference point
information is associated with at least one frequency

Step 203: The terminal performs neighboring cell
measurement based on at least one piece of reference point
information and a distance threshold corresponding to the
at least one piece of reference point information

FIG. 2

301

Receiving
module

302

Measurement
module

FIG. 3

401

Sending
module

FIG. 4

501

Processor

503

Transmitter

505

Bus

502

Receiver

504

Memory

FIG. 5

## INTERNATIONAL SEARCH REPORT

| | International application No. |
|---|---|
| | **PCT/CN2022/086688** |

### A. CLASSIFICATION OF SUBJECT MATTER

H04W 24/10(2009.01)i

According to International Patent Classification (IPC) or to both national classification and IPC

### B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS, CNTXT, ENTXT, ENTXTC, 3GPP, IEEE: 邻小区, 测量, 精确, 准确, 门限, 阈值, 位置, 距离, 频率, 优先级, 切换, 重选, 终端, 基站, 非陆地网络, 陆地网络; neighbor cell, measur+, accurate, threshold, position, distance, frequency, priority, switch+, reselect+, terminal, station, eNB, NTN, TN

### C. DOCUMENTS CONSIDERED TO BE RELEVANT

| Category* | Citation of document, with indication, where appropriate, of the relevant passages | Relevant to claim No. |
|---|---|---|
| X | CATT. "Further discuss CHO solutions for NR NTN"<br>*3GPP TSG-RAN WG2 Meeting #113bis-e, R2-2102954*, 02 April 2021 (2021-04-02),<br>text, sections 1-4 | 1-24 |
| A | CN 101557615 A (ZTE CORP.) 14 October 2009 (2009-10-14)<br>entire document | 1-24 |
| A | CN 101557628 A (DATANG MOBILE COMMUNICATIONS EQUIPMENT CO., LTD.) 14 October 2009 (2009-10-14)<br>entire document | 1-24 |
| A | CN 113647145 A (OPPO GUANGDONG MOBILE TELECOMMUNICATIONS CO., LTD.) 12 November 2021 (2021-11-12)<br>entire document | 1-24 |
| A | WO 2020148582 A1 (TELEFONAKTIEBOLAGET LM ERICSSON (PUBL)) 23 July 2020 (2020-07-23)<br>entire document | 1-24 |
| A | WO 2021138798 A1 (QUALCOMM INC. et al.) 15 July 2021 (2021-07-15)<br>entire document | 1-24 |

☑ Further documents are listed in the continuation of Box C.    ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **03 November 2022** | **12 January 2023** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2022/086688** |

**C.    DOCUMENTS CONSIDERED TO BE RELEVANT**

| Category* | Citation of document, with indication, where appropriate, of the relevant passages | Relevant to claim No. |
|---|---|---|
| A | WO 2021226824 A1 (QUALCOMM INC. et al.) 18 November 2021 (2021-11-18)<br>entire document | 1-24 |

Form PCT/ISA/210 (second sheet) (January 2015)

**INTERNATIONAL SEARCH REPORT**
**Information on patent family members**

International application No.

**PCT/CN2022/086688**

| Patent document cited in search report | | | Publication date (day/month/year) | Patent family member(s) | | | Publication date (day/month/year) |
|---|---|---|---|---|---|---|---|
| CN | 101557615 | A | 14 October 2009 | None | | | |
| CN | 101557628 | A | 14 October 2009 | CN | 101557628 | B | 20 April 2011 |
| CN | 113647145 | A | 12 November 2021 | WO | 2021062729 | A1 | 08 April 2021 |
| WO | 2020148582 | A1 | 23 July 2020 | US | 2022104082 | A1 | 31 March 2022 |
| | | | | JP | 2022516948 | A | 03 March 2022 |
| | | | | EP | 3912393 | A1 | 24 November 2021 |
| | | | | VN | 81979 | A | 25 November 2021 |
| WO | 2021138798 | A1 | 15 July 2021 | None | | | |
| WO | 2021226824 | A1 | 18 November 2021 | None | | | |

Form PCT/ISA/210 (patent family annex) (January 2015)